(19) Europäisches Patentamt
European Patent Office
Office européen des brevets

(11) **EP 3 648 440 B1**

(12) **EUROPEAN PATENT SPECIFICATION**

(45) Date of publication and mention
of the grant of the patent:
**28.07.2021 Bulletin 2021/30**

(51) Int Cl.:
**H04L 29/08** *(2006.01)*   **H04W 4/48** *(2018.01)*
**G01C 21/26** *(2006.01)*

(21) Application number: **19206282.6**

(22) Date of filing: **30.10.2019**

(54) **COMMUNICATION CONTROL DEVICE, COMMUNICATION SYSTEM, METHOD OF CONTROLLING COMMUNICATION**

KOMMUNIKATIONSSTEUERUNGSVORRICHTUNG, KOMMUNIKATIONSSYSTEM, VERFAHREN ZUR STEUERUNG VON KOMMUNIKATION

DISPOSITIF DE COMMANDE DE COMMUNICATION, SYSTÈME DE COMMUNICATION, PROCÉDÉ DE COMMANDE DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2018 JP 2018205730**

(43) Date of publication of application:
**06.05.2020 Bulletin 2020/19**

(73) Proprietor: **TOYOTA JIDOSHA KABUSHIKI KAISHA**
**Toyota-shi, Aichi-ken, 471-8571 (JP)**

(72) Inventors:
• **TSUCHIYA, Daisuke**
  **Aichi-ken, 471-8571 (JP)**
• **SAKAYANAGI, Yoshihiro**
  **Aichi-ken, 471-8571 (JP)**
• **WAKAZONO, Takafumi**
  **Aichi-ken, 471-8571 (JP)**

(74) Representative: **D Young & Co LLP**
**120 Holborn**
**London EC1N 2DY (GB)**

(56) References cited:
GB-A- 2 536 718        US-A1- 2008 287 141
US-A1- 2013 066 552

**Description**

BACKGROUND

The present disclosure relates to a communication control device, a communication system, and a method of controlling communication.

US 2008/287141 A1 relates to a 'Method and device for optimizing the radio transmission of data between a vehicle and an external remote station'.

GB 2536718 A relates to 'Connectivity'.

JP 2017-226384 A discloses a system in which a portable terminal and an instrument mounted on a vehicle are wirelessly connected to perform data communication. In this system, when the change amount of the vehicle information is larger than the predetermined range, data communication of the data of the vehicle information is performed in a first short cycle, and the change state of the vehicle information is monitored in detail. Further, when the change amount of the vehicle information is smaller than the predetermined range, the data communication is performed in a second cycle longer than the first cycle, and the battery consumption of the portable terminal is decreased.

In the system described in JP 2017-226384 A, when the change amount of the vehicle information is larger than the predetermined range at a certain time point, the next communication is also set to the short first cycle. However, if the change amount in the vehicle information becomes smaller than the predetermined range before the next communication, it is not necessary to perform communication in the first cycle as it merely accelerates the battery consumption of the portable terminal.

Meanwhile, if the change amount of the vehicle information is smaller than the predetermined range at a certain time point, the next communication is also set to the second cycle. However, if the change amount of the vehicle information becomes larger than the predetermined range before the next communication, the change of the vehicle information cannot be grasped in detail even when the communication is performed in the second cycle.

There is a need for a communication control device, a communication system, and a method of controlling communication which are capable of acquiring a change of vehicle information in detail, while decreasing battery consumption of the mobile communication device during data communication regarding vehicle information.

SUMMARY

According to the present disclosure, there is provided a communication control device for controlling communication of an in-vehicle communication device which is communicable with a mobile communication device according to claim 1, a system according to claim 10 and a method according to claim 11.

The above and other objects, features, advantages and technical and industrial significance of this disclosure will be better understood by reading the following detailed description of presently preferred embodiments of the disclosure, when considered in connection with the accompanying drawings.

BRIEF DESCRIPTION OF THE DRAWINGS

FIG. 1 is a schematic block diagram illustrating a communication system according to an embodiment;
FIG. 2 schematically illustrates a structure of a vehicle and an electronic control unit that controls the vehicle according to the embodiment;
FIG. 3 is a schematic block diagram illustrating a first modification of the communication system according to the embodiment;
FIG. 4 is a schematic block diagram illustrating a second modification of the communication system according to the embodiment;
FIG. 5 is a flowchart of a data communication method according to a first embodiment;
FIG. 6 is a time chart of the data communication method according to the first embodiment;
FIG. 7 is a flowchart of a data communication method according to a second embodiment;
FIG. 8 is a time chart of the data communication method according to the second embodiment;
FIG. 9 is a flowchart of a data communication method according to a third embodiment;
FIG. 10 is a time chart of the data communication method according to the third embodiment;
FIG. 11 is a flowchart of a data communication method according to a fourth embodiment;
FIG. 12 is a time chart of the data communication method according to the fourth embodiment;
FIG. 13 is a flowchart of a data communication method according to a fifth embodiment;
FIG. 14 is a flowchart of a data communication method according to a sixth embodiment.

FIG. 15A is the first half of a flowchart for explaining an example of creating a travel plan;

FIG. 15B is the second half of the flowchart for explaining the example of creating the travel plan;

FIG. 16A is a diagram for explaining creation of a first travel plan optimizing a travel of one trip;

FIG. 16B is a diagram for explaining creation of the first travel plan optimizing the travel of one trip;

FIG. 16C is a diagram for explaining creation of the first travel plan optimizing the travel of one trip;

FIG. 17A is a diagram for explaining creation of a second travel plan optimizing a plurality of trips;

FIG. 17B is a diagram for explaining creation of the second travel plan optimizing the plurality of trips; and

FIG. 17C is a diagram for explaining creation of the second travel plan optimizing the plurality of trips.

## DETAILED DESCRIPTION

Hereinafter, embodiments of the present disclosure will be described in detail with reference to the accompanying drawings. The embodiments are not intended to limit the present disclosure.

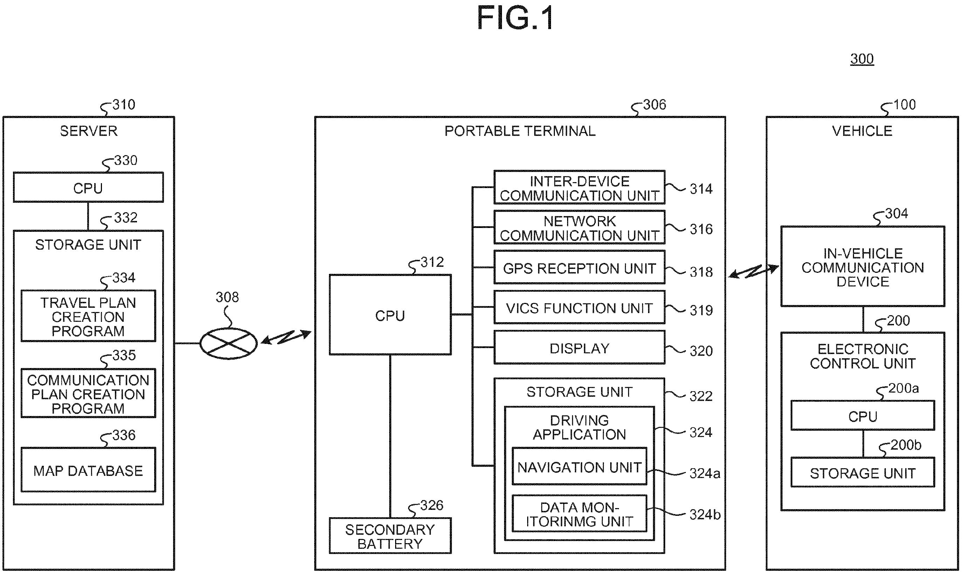

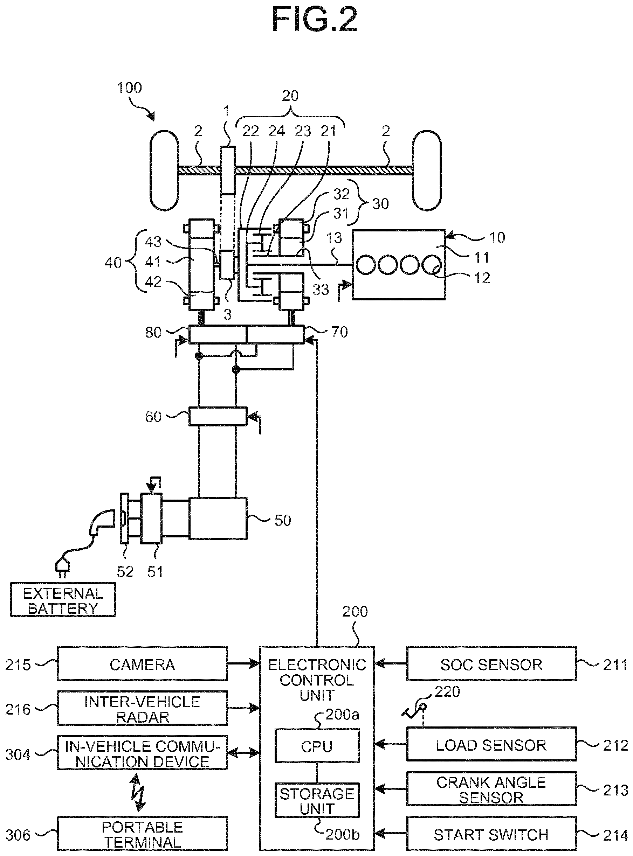

FIG. 1 is a schematic block diagram illustrating a data communication system 300 according to an embodiment. The data communication system 300 is a system including a vehicle 100, a portable terminal (mobile communication device) 306, and a server 310. The portable terminal 306 is possessed by a driver of the vehicle 100 and is assumed to be located inside the vehicle 100 together with the driver while the vehicle 100 is traveling. The portable terminal 306 and the server 310 are connected by a communication network 308. The vehicle 100 is provided with an in-vehicle communication device 304. The in-vehicle communication device 304 and the portable terminal 306 can perform wireless bidirectional data communication. In the data communication system 300, the vehicle 100 will be described first with reference to FIG. 2.

FIG. 2 schematically illustrates a structure of the vehicle 100 and an electronic control unit 200 that controls the vehicle 100 according to the embodiment. The vehicle 100 includes an engine 10, a power dividing mechanism 20, a first rotating electric machine 30, a second rotating electric machine 40, an in-vehicle battery 50, a boost converter 60, a first inverter 70, and a second inverter 80. The hybrid vehicle is configured to be able to transmit the power of one or both of the engine 10 and the second rotating electric machine 40 to a wheel drive shaft 2 via a final reduction gear 1.

The engine 10 burns the fuel in individual cylinders 12 formed in an engine body 11 to generate power for rotating an output shaft 13 connected to the crankshaft.

The power dividing mechanism 20 is a planetary gear that divides the power of the engine 10 into two systems of power for rotating a wheel drive shaft 2 and power for regeneration driving of the first rotating electric machine 30, and that includes a sun gear 21, a ring gear 22, a pinion gear 23, and a planetary carrier 24.

The sun gear 21 is an external gear disposed at the center of the power dividing mechanism 20. The sun gear 21 is connected to a rotating shaft 33 of the first rotating electric machine 30.

The ring gear 22 is an internal gear disposed around the sun gear 21 so as to be concentric with the sun gear 21. The ring gear 22 is coupled to the rotating shaft 33 of the second rotating electric machine 40. Further, a drive gear 3 for transmitting the rotation of the ring gear 22 to the wheel drive shaft 2 via the final reduction gear 1 is integrally attached to the ring gear 22.

The pinion gear 23 is an external gear, and a plurality of pinion gears 23 are disposed between the sun gear 21 and the ring gear 22 so as to mesh with the sun gear 21 and the ring gear 22.

The planetary carrier 24 is connected to the output shaft 13 of the engine 10 and rotates around the output shaft 13. The planetary carrier 24 is also connected to each pinion gear 23 so that when the planetary carrier 24 rotates, each pinion gear 23 can rotate (revolve) around the sun gear 21 while rotating (revolving) individually.

The first rotating electric machine 30 is, for example, a three-phase AC synchronous motor generator which includes a rotor 31 attached to the outer periphery of the rotating shaft 33 connected to the sun gear 21 and having a plurality of permanent magnets embedded in the outer periphery and a stator 32 around which an excitation coil that generates a rotating magnetic field is wound. The first rotating electric machine 30 has a motor function to perform powering drive by receiving power supply from the in-vehicle battery 50, and a generator function to receive power from the engine 10 and perform regeneration driving.

In the present embodiment, the first rotating electric machine 30 is mainly used as a generator. During cranking by rotating the output shaft 13 at the start of the engine 10, the first rotating electric machine 30 is used as a motor and serves as a starter.

The second rotating electric machine 40 is, for example, a three-phase AC synchronous motor generator which includes a rotor 41 attached to the outer periphery of a rotating shaft 43 connected to the ring gear 22 and having a plurality of permanent magnets embedded in the outer periphery and a stator 42 around which an excitation coil that generates a rotating magnetic field is wound. The second rotating electric machine 40 has an electric motor function to power-drive by receiving power supply from the in-vehicle battery 50, and a generator function to receive power from the wheel drive shaft 2 for regeneration driving during, for example, deceleration of the vehicle.

The in-vehicle battery 50 is a chargeable/dischargeable secondary battery such as, for example, a nickel-cadmium storage battery, a nickel-hydrogen storage battery, or a lithium ion battery. In the present embodiment, a lithium ion secondary battery having a rated voltage of about 200 V is used as the in-vehicle battery 50. The in-vehicle battery 50 is electrically connected to the first rotating electric machine 30 and the second rotating electric machine 40 via the boost converter 60 and the like, and supplies the charging power of the in-vehicle battery 50 to the first rotating electric machine 30 and the second rotating electric machine 40 to allow them running by power-driving and charge the in-vehicle battery 50 with the generated power from the first rotating electric machine 30 and the second rotating electric machine 40.

Further, the in-vehicle battery 50 is configured to be electrically connectable to an external power supply via a charge control circuit 51 and a charging lid 52 to allow charging from an external power supply such as a household outlet. The vehicle 100 according to the embodiment, therefore, is a so-called plug-in hybrid vehicle. The vehicle 100 may not be plug-in type. The charge control circuit 51 is an electric circuit that converts an alternating current supplied from the external power supply into a direct current in accordance with a control signal from the electronic control unit 200, boosts the input voltage to the battery voltage, and charges the power of the external power supply into the in-vehicle battery 50. Of course, the in-vehicle battery 50 is different from a secondary battery 326 (see FIG. 1) in the portable terminal 306 described above.

The boost converter 60 includes an electric circuit that boosts the voltage between terminals of the primary side terminal in accordance with the control signal from electronic control unit 200 and outputs the voltage from the secondary side terminal, and in contrast, decreases the voltage between the secondary side terminals in accordance with the control signal from electronic control unit 200 and outputs the voltage from the primary side terminal. The primary side terminal of the boost converter 60 is connected to the output terminal of the in-vehicle battery 50, and the secondary side terminal is connected to DC-side terminals of the first inverter 70 and the second inverter 80.

The first inverter 70 and the second inverter 80 each include an electric circuit that converts the direct current input from the DC-side terminal into an alternating current (a three-phase alternating current in this embodiment) in accordance with the control signal from the electronic control unit 200 and outputs the alternating current from an AC-side terminal, and in contrast, converts an alternating current input from the AC-side terminal into a direct current in accordance with the control signal from the electronic control unit 200 and outputs the direct current from the DC side terminal. The DC-side terminal of the first inverter 70 is connected to the secondary side terminal of the boost converter 60, and the AC-side terminal of the first inverter 70 is connected to an input/output terminal of the first rotating electric machine 30. The DC-side terminal of the second inverter 80 is connected to the secondary side terminal of the boost converter 60, and the AC-side terminal of the second inverter 80 is connected to the input/output terminal of the second rotating electric machine 40.

The electronic control unit 200 includes a central processing unit (CPU, communication control device), a storage unit 200b, and input and output ports (not illustrated). The storage unit 200b is, for example, a read-only memory (ROM), a random access memory (RAM), a flash memory, or the like.

The electronic control unit 200 receives output signals from various sensors, such as a state-of-change (SOC) sensor 211 which detects a battery charge amount, a load sensor 212 which generates an output voltage proportional to the depression amount of an accelerator pedal 220, and a crank angle sensor 213 which generates an output pulse every time the crankshaft of the engine body 11 rotates, for example, 15 degrees, as signals for calculating an engine rotational speed or the like.

A camera 215 periodically shoots the front of the vehicle 100. The image captured by the camera 215 is analyzed by the electronic control unit 200 to detect, for example, other vehicles, people, or obstacles around. An inter-vehicle radar 216 emits radio waves to the front of the vehicle 100 to detect an object existing ahead and a distance from the object based on the reflected wave. The electronic control unit 200 monitors the state in the front by the camera 215 and the inter-vehicle radar 216, and executes collision avoidance control processing, as necessary. The collision avoidance control is to detect a car or obstacle ahead and support the collision avoidance by some means, such as Pre-Crash Safety (PCS, registered trademark).

The in-vehicle communication device 304 performs wireless data communication with the portable terminal 306. In FIGS. 1 and 2, the wireless communication points are indicated by bent arrows. For example, Bluetooth (registered trademark) is used as a wireless communication standard. The in-vehicle communication device 304 communicates various types of vehicle information data of the vehicle 100 supplied via the electronic control unit 200 to the portable terminal 306. The vehicle information data will be described later. Further, the in-vehicle communication device 304 receives the travel plan from the portable terminal 306 and supplies the travel plan to the electronic control unit 200. The in-vehicle communication device 304 may be included in the electronic control unit 200.

The electronic control unit 200 controls the vehicle 100 by driving each control unit in accordance with the input signals from the various sensors and the like. Further, the electronic control unit 200 switches the travel mode to either an electric vehicle (EV) mode or a hybrid vehicle (HV) mode to drive the vehicle 100.

In the EV mode, the second rotating electric machine 40 is driven by powering using the charging power of the in-vehicle battery 50 with priority, and at least the power of the second rotating electric machine 40 is transmitted to the wheel drive shaft 2 to drive the vehicle 100.

When the travel mode is the EV mode, the electronic control unit 200 substantially drives the second rotating electric machine 40 by power running using the charged power of the in-vehicle battery 50 while the engine 10 is stopped, and drives the vehicle 100 by rotating the wheel drive shaft 2 only by the power of the second rotating electric machine 40.

On the other hand, when the engine 10 is operated in the HV mode, the generated electric power of the first rotating electric machine 30 is preferentially used to drive the second rotating electric machine 40 by power running, and motive power of both the engine 10 and the second rotating electric machine 40 is transmitted to the wheel drive shaft 2 to drive the vehicle 100.

When the travel mode is the HV mode, the electronic control unit 200 divides the power of engine 10 into two systems by the power dividing mechanism 20, and transmits one of the divided power of the engine 10 to wheel drive shaft 2 while regeneratively driving the first rotating electric machine 30 by the other power. Basically, the second rotating electric machine 40 is driven by power-running of the first rotating electric machine 30, and the power of the second rotating electric machine 40 is transmitted to the wheel drive shaft 2 in addition to the one power of the engine 10 to drive the vehicle 100.

Next, the data communication system 300 will be described.

Returning to FIG. 1, the data communication system 300 includes the in-vehicle communication device 304 mounted on the vehicle 100, the portable terminal 306 capable of performing data communication with the in-vehicle communication device 304, and the server 310 that controls the portable terminal 306 via the communication network 308. The communication network 308 is, for example, the Internet.

The portable terminal 306 is, for example, a general-purpose smartphone, and a CPU (communication control device) 312 performs overall control. The portable terminal 306 includes an inter-device communication unit 314 that performs wireless communication with the in-vehicle communication device 304, a network communication unit 316 that performs wireless communication with the communication network 308, a global positioning system (GPS) reception unit 318, a vehicle information and communication system (VICS, registered trademark) function unit 319, a display 320, and a storage unit 322. The GPS reception unit 318 receives signals from three or more GPS satellites, specifies latitude and longitude, and detects the present position of the portable terminal 306. When the portable terminal 306 is in the vehicle 100, the present position of the portable terminal 306 can be regarded as the present position of the vehicle 100. The VICS function unit 319 is a unit that receives VICS information. The VICS is a system for delivering traffic conditions, such as traffic jam information, traffic regulation information, parking lot information, traffic obstacle information, and time required to the vehicle 100 in real time using FM multiplex broadcasting and beacons. The display 320 is a touch panel type display that displays data supplied from the CPU 312 as an image, and supplies coordinate data input by finger operation to the CPU 312. A power saving mode can be set in the portable terminal 306 and, when there is no input for a predetermined time period, the display 320 stops displaying or decreases brightness of the display.

The storage unit 322 stores a driving application 324 downloaded from the server 310 or the like. The driving application 324 is divided into a navigation unit 324a and a data monitoring unit 324b. The navigation unit 324a as a first function performs navigation of the vehicle 100 in accordance with the travel plan supplied from the server 310. The data monitoring unit 324b as a second function acquires vehicle information from the in-vehicle communication device 304.

As navigation of the vehicle 100 by the navigation unit 324a, the planned travel route and the present location of the vehicle 100 are displayed on the display 320, and further, travel guidance is given by voice. The vehicle information acquired from the in-vehicle communication device 304 is displayed on the display 320 and stored in the storage unit 322, or transmitted to the server 310. The acquired vehicle information may be analyzed or monitored by a predetermined means.

The vehicle information acquired by the data monitoring unit 324b is information indicating the travel state, the state of the drive system, and the like of the vehicle 100, and mainly includes HV-related data or engine-related data. The HV-related data is mainly the information related to the electric machine system, and includes the rotation numbers and temperatures of the first rotating electric machine 30 and the second rotating electric machine 40, the charge remaining amount and the current value of the in-vehicle battery 50, and the like. The engine-related data is mainly related to the engine 10, and includes, for example, the engine speed, the engine oil temperature, the cooling water temperature, and the fuel remaining amount. The vehicle information also includes exhaust gas recirculation (EGR) control data, variable valve timing (VVT, registered trademark) control data, door open/close data, collision avoidance control data, misfire determination control data, and the like. The EGR control recirculates the exhaust gas from the exhaust system to the intake system. The VVT control variably controls the valve opening/closing timing of the engine 10. The vehicle information may further include a traveling speed, an acceleration degree, a slip ratio, a steering angle, an accelerator opening, a brake pedal depression amount, and the like.

Further, the vehicle information is divided into rapid change data and slow change data according to the possible change speed of the values. For example, the data related to the rotation speed indicating a behavior with a small time constant is the rapid change data, and the data related to the temperature indicating a behavior with a large time constant is the slow change data. Three or more divisions are provided according to the change rate.

The driving application 324 is read and executed by the CPU 312 and is executed while the vehicle 100 is traveling. When the travel time of the vehicle 100 is long, the execution time of the driving application 324 and the operation time of the portable terminal 306 also become long.

The portable terminal 306 includes the secondary battery (battery) 326 as a power source. The secondary battery 326 is, for example, a lithium ion type battery. Since the secondary battery 326 is thin enough to fit in the housing of the portable terminal 306, the charge capacity is not necessarily large enough. Therefore, when the operation time of the portable terminal 306 is long, it is desirable to suppress power consumption. In the present embodiment, as will be described later, during the execution of the driving application 324, the power consumption of the wireless communication in the inter-device communication unit 314 which consumes a relatively large amount of power is reduced.

The server 310 includes a CPU (communication control device) 330 as a processor and a storage unit 322. Further, although not illustrated, the server 310 includes a memory, a computer readable recording medium, a reading device of the recording medium, an image sensor, a user interface, and a display. The memory is, for example, a ROM or a RAM. The computer readable recording medium is, for example, a hard disk. The reading device is, for example, an optical disk or a flash memory. The image sensor is, for example, a complementary metal oxide semiconductor (CMOS) or a charge-coupled device (CCD). The user interface is, for example, a keyboard, a touch panel, a switch, or a microphone. The display is, for example, a liquid crystal display or an organic electroluminescence (EL) display. The CPU 330 performs overall control of the server 310. The storage unit 332 stores a travel plan creation program (travel plan creation unit) 334, a communication plan creation program 335, and a map database 336. As the server 310, general-purpose hardware can be used.

The CPU 330, a storage unit 332, and so on in the server 310 may not necessarily be integrated into one unit. For example, the storage unit 332 may be located at a remote location via the communication network 308. The server 310, the travel plan creation program 334, the communication plan creation program 335, and the map database 336 exist in the locations not limited to the country in which the vehicle 100 is operated, but as long as they can be controlled in the country and some advantage is provided in the country, those can be regarded as being installed and used in the country.

The CPU 330 reads and executes the travel plan creation program 334 and cooperates with the portable terminal 306 to create a travel plan of the vehicle 100.

Further, the CPU 330 reads and executes the communication plan creation program 335 to create at least one of a communication amount plan (communication plan) for switching the communication amount of data communication between the in-vehicle communication device 304 and the portable terminal 306 and a communication frequency plan (communication plan) for switching the communication frequency. Hereinafter, a communication amount plan and a communication frequency plan are collectively referred to as a communication plan. The set communication plan may be included in the travel plan.

The communication amount plan is a communication plan in which the communication amount is switched according to the change of mode of the travel state at the time of switching various travel states of the vehicle 100 in the travel plan. Similarly, the communication frequency plan is a communication plan in which the communication frequency is switched according to the change of mode of the travel state at the time of switching of various travel states of the vehicle 100 in the travel plan. Switching time of these travel states is in accordance with a travel plan, so that the switching time can also be referred to as switching planning time or switching prediction time. The switching time of the travel state is determined from the travel point, travel distance, travel time, and the like of the vehicle 100 in accordance with the travel plan.

Switching of the communication amount means, for example, switching on and off of communication of a plurality of pieces of data to acquire necessary data according to the situation and stop communication of unnecessary or less needed data, thus decreasing the communication and power consumption amount. Instead of switching the communication amount for individual data, the communication amount may be switched for data group such as the HV-related data or the engine-related data. Further, the switching of the communication amount includes the case where the communication amount is completely zero.

The switching of the communication frequency is the switching of the data acquisition frequency. For example, in a case where the data change degree is large according to the situation, the data acquisition is switched to be performed in a short cycle, and in a case where the degree of change of data is small, the data acquisition is switched to be performed in a long cycle. Switching of the communication frequency can be set for each data or data group.

As described later, the communication conditions of the vehicle information from the in-vehicle communication device 304 to the portable terminal 306 are switched in accordance with the communication amount plan and the communication frequency plan, but may also be switched in accordance with either the communication amount plan or the communication frequency plan, and the corresponding effect can be obtained.

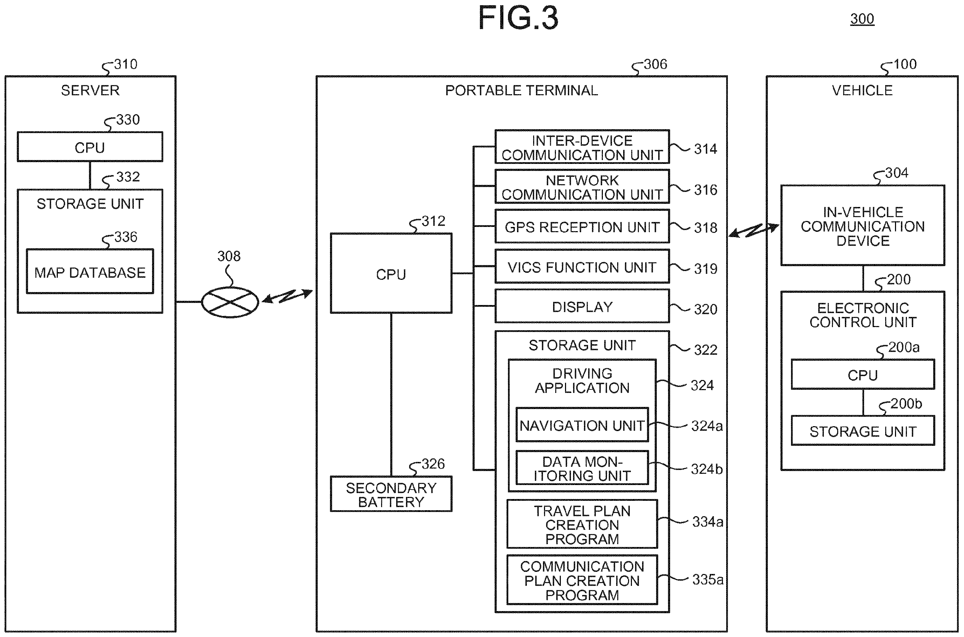

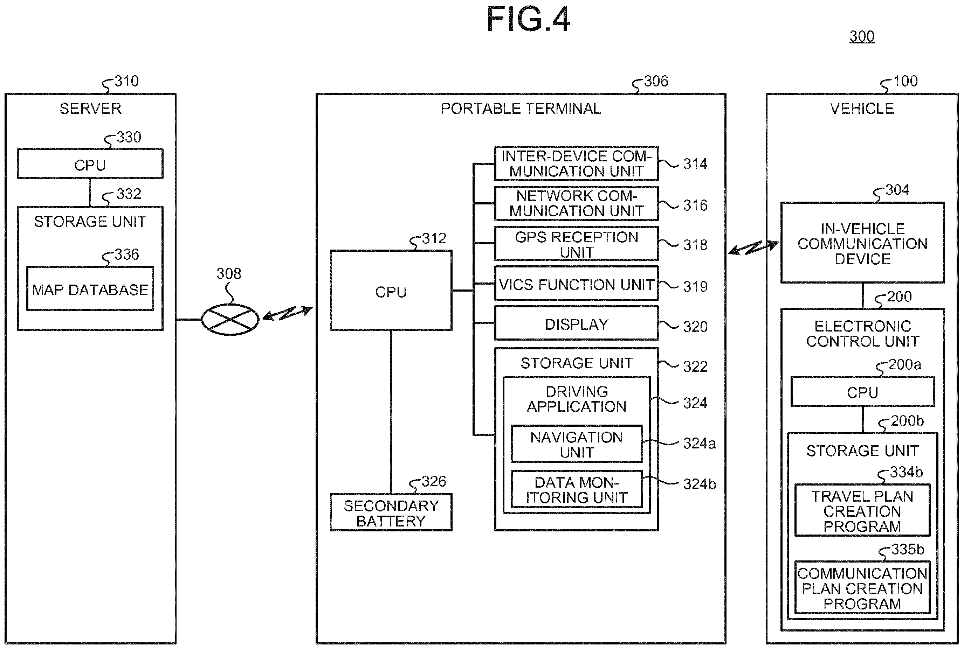

The travel plan creation unit corresponding to the travel plan creation program 334 and the communication plan creation unit corresponding to the communication plan creation program 335 may be provided not only in the server 310 but also in the portable terminal 306 or the electronic control unit 200. That is, as illustrated in FIG. 3, in the portable terminal 306, the CPU 312 may read and execute a travel plan creation program 334a and a communication plan creation program 335a stored in the storage unit 322 to create the travel plan and the communication plan. Further, as illustrated in FIG. 4, in the vehicle 100, the CPU provided in the electronic control unit 200 may read and execute a travel plan creation program 334b and a communication plan creation program 335b stored in the storage unit 200b to create the travel plan and the communication plan. The map database 336 may also be provided in the storage unit of the portable terminal 306 or in the storage unit 200b of the electronic control unit 200.

The travel plan creation program 334 and the communication plan creation program 335 may be configured integrally. The communication amount plan and the communication frequency plan may be provided as an integrated communication plan. The travel plan and the communication plan may be provided integrally.

The travel plan and the communication plan may be cooperatively created by sharing functions among the server 310, the portable terminal 306, and the electronic control unit 200. The travel plan and the communication plan which have been created are transmitted to the portable terminal 306 via the communication network 308, but may be held by the server 310, supplied to the electronic control unit 200, or shared by the server 310 and the electronic control unit 200. The travel plan and the communication plan are created before or at the time of departure of the vehicle 100, but may be recreated and updated periodically or at any timing according to the travel of the vehicle 100. Thus, a highly accurate travel plan and communication plan can be obtained according to the travel situation. Details of a method of creating a travel plan by the travel plan creation program 334 will be described later.

The map database 336 is a database related to map information. The map information of the map database 336 includes various road information including information of road position and road shape (e.g., a gradient, types of curves and straight portions, curvature of the curves, etc.), position information of intersections and junctions, road type, speed limit, and so on.

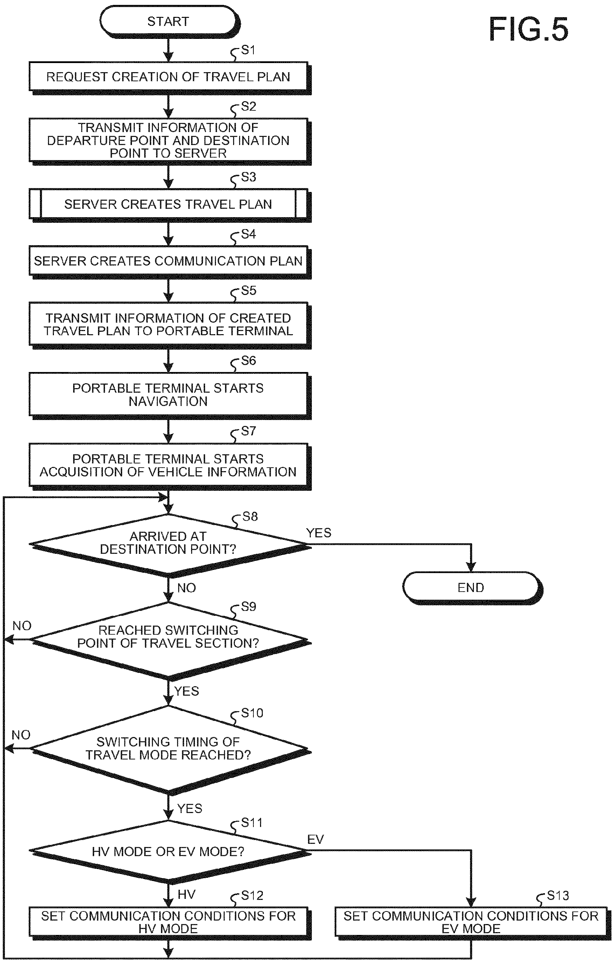

Next, the data communication method according to the first to sixth embodiments performed between the portable terminal 306 and the in-vehicle communication device 304 in the data communication system 300 will be described with reference to FIGS. 5 to 12. Among these, in the data communication method according to the first to fourth embodiments, it is assumed that the acquired travel plan includes four travel sections k1 to k4.

Data Communication Method According to First Embodiment

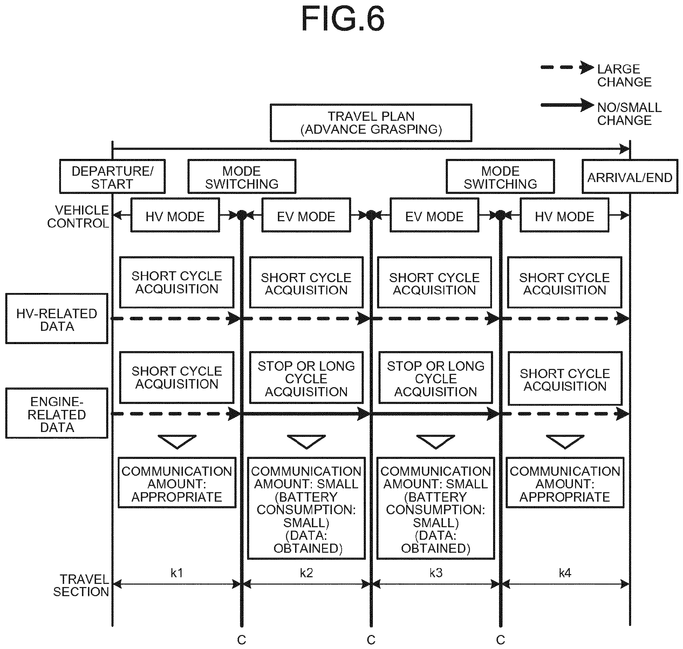

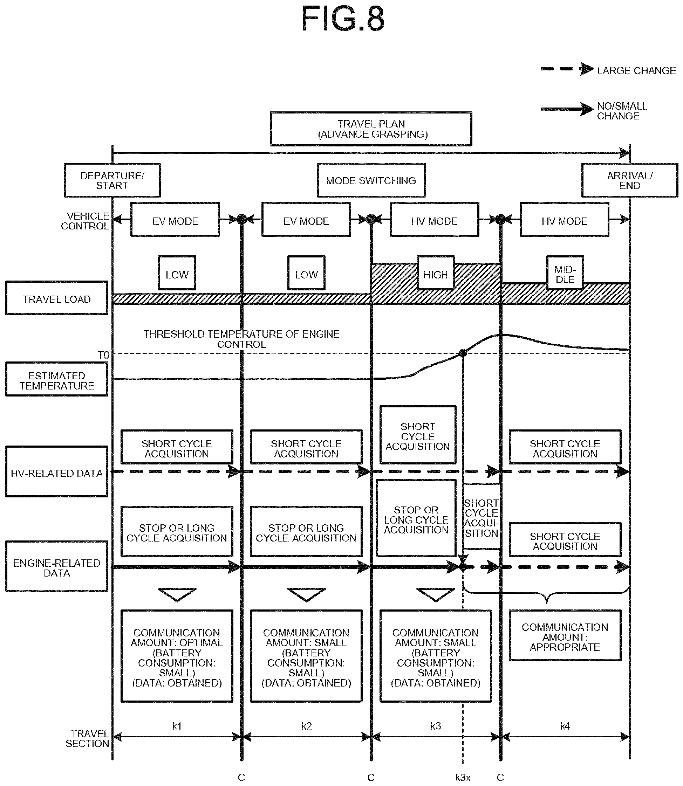

First, the data communication method according to a first embodiment will be described with reference to FIGS. 5 and 6. FIG. 5 is a flowchart illustrating a data communication method in a data communication method according to the first embodiment, and FIG. 6 is a schematic time chart in the data communication method according to the first embodiment. In FIG. 6, the horizontal axis is more precisely illustrated in accordance with a travel section instead of time. The same applies to FIGS. 8, 10, and 12.

In the data communication method according to the first to third embodiments, it is assumed that the portable terminal 306 acquires HV-related data and engine-related data from the in-vehicle communication device 304. In FIGS. 6, 8, 10, and 12, the sections with large changes of data are indicated by solid arrows, and the sections having no change or small changes are indicated by broken arrows.

In Step S1 of FIG. 5, to use the data communication system 300, the driver of the vehicle 100 launches the driving application 324 on the portable terminal 306 and requests creation of a travel plan from the departure point (e.g., the present location) to the destination point. The present location or the destination point can be designated using the touch panel function of the display 320 by inputting an address, a telephone number, a zip code, a facility name, or the like to pinpoint the place on the map, or can be selected from past logs. The following Steps S2 to S6 are mainly performed by the navigation unit 324a.

In Step S2, the navigation unit 324a of the driving application 324 acquires the present location by the GPS reception unit 318, further acquires the traffic situation by the VICS function unit 319, and transmits the acquired traffic situation to the server 310 together with the departure and destination points information that has been input.

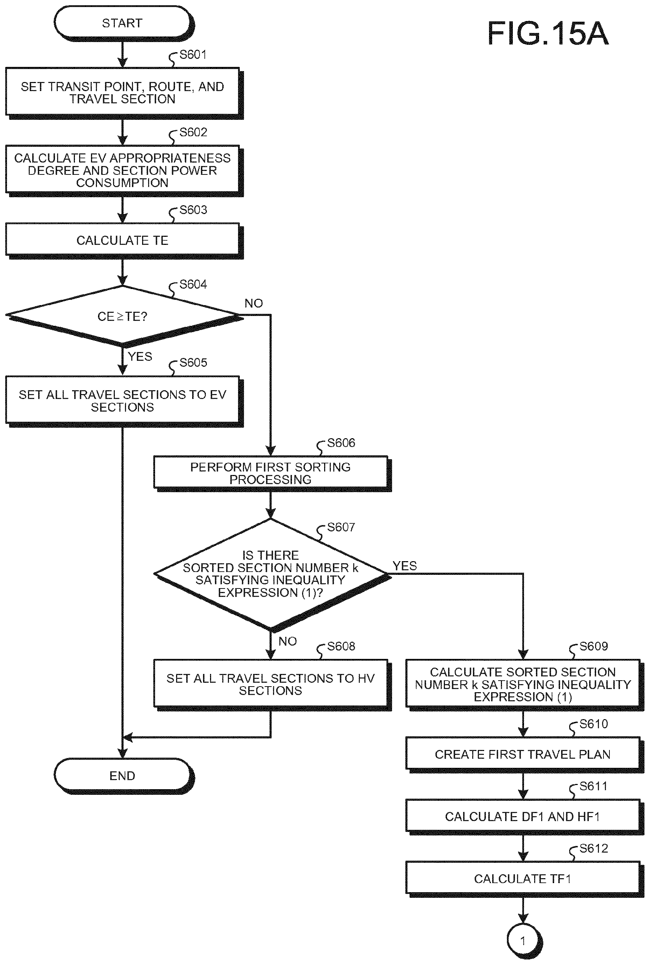

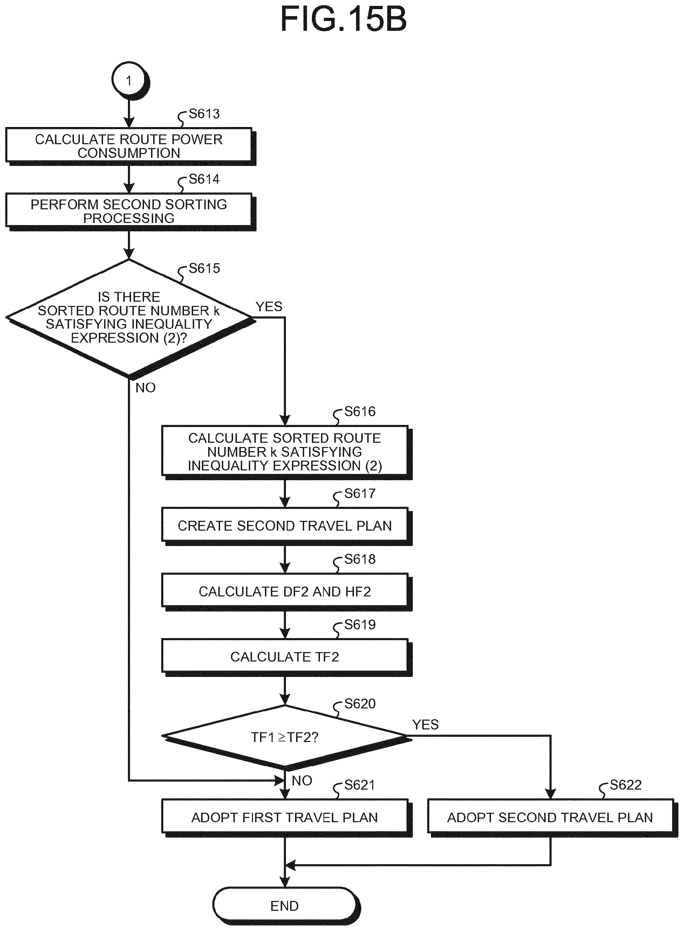

In Step S3, the server 310 creates a travel plan of the vehicle 100 by referring to the information received from the portable terminal 306 by the travel plan creation program 334 and the map database 336. Creation of the travel plan in Step S3 will be described later in accordance with FIGS. 15A and 15B.

The travel plan includes a route from the departure point to the destination point, a travel mode for each of a plurality of travel sections in the route, load prediction information at intermediate points, and traffic situation. As described above, the travel mode includes the EV mode and the HV mode. The load prediction information is created in accordance with the map database 336. The traffic situation is supplied from the VICS function unit 319 of the portable terminal 306. According to this travel plan, it is possible to determine a predicted switching point of the travel mode, a predicted switching point of engine control according to the load prediction, and a section where traffic congestion is predicted to occur.

In Step S4, the server 310 creates the communication plan (that is, at least one of the communication amount plan and the communication frequency plan) in accordance with the travel plan by the communication plan creation program 335 as described above.

In Step S5, the server 310 transmits the created travel plan and communication plan information to the portable terminal 306. The portable terminal 306 stores the received travel plan and communication plan in the storage unit 322.

In Step S6, the portable terminal 306 starts navigation for the driver in accordance with the travel plan received by the navigation unit 324a. That is, the route, the present location, and the destination point are displayed on the display 320 in real time, and travel guidance is provided by voice. The driver starts traveling of the vehicle 100 according to the travel guidance. The navigation unit 324a appropriately transmits information such as the present location to the server 310 as the vehicle 100 travels. The server 310 appropriately recreates the travel plan in accordance with the present location of the vehicle 100 received from the portable terminal 306, and transmits the travel plan to the portable terminal 306. The portable terminal 306 continues the travel guidance while updating the travel plan to a new travel plan supplied from the server 310.

Further, the navigation unit 324a determines the travel mode at that time in accordance with the travel plan and the present location, and transmits a travel mode switching instruction to the electronic control unit 200 as necessary. This transmission is performed by the inter-device communication unit 314 via the in-vehicle communication device 304. The electronic control unit 200 sets the travel state of the vehicle 100 to either the EV mode or the HV mode in accordance with the received switching instruction. Basically, transmission of the travel mode switching instruction may be performed only at the switching timing between the EV mode and the HV mode, and the transmission frequency is low.

Note that the travel mode of the vehicle 100 may be switched by the vehicle 100 autonomously judging regardless of the action of the server 310 or the portable terminal 306. In this case, the portable terminal 306 does not transmit a travel mode switching instruction to the electronic control unit 200, but can estimate the travel mode at that point in real time in accordance with the travel plan supplied from the server 310. The subsequent Steps S7 to S13 are mainly performed by the data monitoring unit 324b.

In Step S7, the data monitoring unit 324b starts acquisition of vehicle information of the vehicle 100. The vehicle information is acquired from the electronic control unit 200 by wireless communication via the in-vehicle communication device 304 and the inter-device communication unit 314. The period for acquiring the vehicle information of the vehicle 100 by the data monitoring unit 324b may be the entire period during which the driving application 324 is activated, the period during which the vehicle 100 is traveling, or only in a specified predetermined period.

The acquisition cycle of the vehicle information by the data monitoring unit 324b is variable. For example, when the portable terminal 306 makes a transmission request to the in-vehicle communication device 304 and, in response to the request, the in-vehicle communication device 304 transmits the vehicle information, so that the cycle of the transmission request becomes the acquisition cycle. The acquisition of vehicle information by the data monitoring unit 324b may be performed by transmitting a data request every time from the portable terminal 306, or the transmission cycle that has been set once may be maintained until the next resetting. The acquisition period of the vehicle information is set in accordance with the communication frequency plan.

The transmission request from the portable terminal 306 to the in-vehicle communication device 304 may include the type of vehicle information to be acquired. That is, the information only needed to be acquired at that time is requested, while other information unnecessary to be acquired is not requested. All the vehicle information to be acquired may be requested individually, or may be requested in accordance with a preset data group. For example, the data groups may be distinguished and designated between the HV-related data and the engine-related data or between the rapid change data and the slow change data. The type of vehicle information to be acquired is set in accordance with the communication amount plan.

When the data monitoring unit 324b acquires the vehicle information, wireless communication is performed between the inter-device communication unit 314 and the in-vehicle communication device 304 for each transmission cycle and consumes power of the secondary battery 326. If the communication amount is small or the communication cycle is long in the wireless communication, the power consumption of the secondary battery 326 increases correspondingly.

In Step S8, it is determined whether the vehicle 100 has arrived at the destination. If the vehicle 100 has arrived at the destination point (Step S8: Yes), the navigation and the vehicle information acquisition are ended, and the process illustrated in FIG. 5 is ended. If the vehicle 100 has not arrived (Step S8: No), the process proceeds to Step S9. Even when the vehicle has not arrived at the destination point, such as in a case where the vehicle 100 is temporarily stopped, the processing of Steps S9 to S13 may be temporarily stopped.

In Step S9, the driving application 324 determines whether or not the switching point C (see FIG. 8) of the plurality of travel sections in the travel plan has been reached. When the switching point C of the travel section has been reached (Step S9: Yes), the process proceeds to Step S10. When the next travel section has not been reached (Step S9: No), the process returns to Step S8. That is, as illustrated in FIG. 6, when there are four travel sections k1 to k4 in the travel plan, the process proceeds to Step S10 at the switching timing of the travel sections k1 to k4. When traveling in the travel sections k1 to k4, the process returns to Step S8.

In Step S10, the driving application 324 determines whether or not the travel mode switching timing has come.

That is, the switching point C between the travel section k1 and the travel section k2 in FIG. 6 is the switching timing from the HV mode to the EV mode of the travel mode. In this case (Step S10: Yes), the process proceeds to Step S11. Since the switching point C between the travel section k3 and the travel section k4 is also the switching timing from the EV mode to the HV mode, the process returns to Step S8. On the other hand, at the switching timing between the travel section k2 and the travel section k3, the travel mode is not switched from the EV mode (Step S10: No), the process proceeds to Step S11.

In Step S11, it is determined whether the next travel mode to be switched is the HV mode or the EV mode. When the next travel mode is the HV mode, the process proceeds to Step S12, and when the travel mode is the EV mode, the process proceeds to Step S13. Note that the start of travel when the vehicle 100 departs is also regarded as the switching timing of the travel mode in a broad sense, and the branch determination processing of Step S11 is executed.

In Step S12, the travel mode is switched to the HV mode, and communication conditions suitable for the HV mode are set. That is, the engine 10, the first rotating electric machine 30, and the second rotating electric machine 40 work cooperatively to generate the driving force in the HV mode, as described above. Thus, it is desired to enable monitoring of the operating state of these devices. Therefore, both the HV-related data and the engine-related data are acquired in the setting. This communication condition is in accordance with the communication amount plan.

Further, in this case, both the HV-related data and the engine-related data contain the rapid change data, so that the short cycle acquisition is set to acquire the change state as much as possible without loss. This communication condition is in accordance with the communication frequency plan.

As described above, a large amount of data needs to be acquired in the HV mode even in the short cycle, so that the power consumption of the secondary battery 326 required for the wireless communication tends to increase to some extent. However, the timing at which the EV mode switches to the HV mode is set or estimated in advance in the travel plan, and by setting and switching the communication conditions in accordance with the communication plan at this timing, the data acquisition cycle can be set slightly in advance of or at the actual rapid change of the rapid change data. That is, instead of changing the cycle after the increase of the data change amount is detected as in JP 2017-226384 A, it is possible to change the cycle along with the increase of the data change amount, thus preventing the delay in the cycle setting and decreasing the loss in the data acquisition. In this case, both the HV-related data and the engine-related data are communicated at one time and in the short cycle. This increases the communication amount, but the amount is appropriate. This feature is described as "the amount of communication is appropriate" in FIG. 6.

On the other hand, in Step S13, it is time to switch to the EV mode, and the communication conditions suitable for the EV mode are set.

As described above, the EV mode is a mode in which the second rotating electric machine 40 is driven by power running by the use of the charging power of the in-vehicle battery 50 while the engine 10 is substantially stopped. Therefore, the engine-related data hardly changes or changes by a sufficiently small amount. More specifically, the rapid change data (e.g., the number of revolutions of the engine 10) of the engine-related data tends to reach a constant value (e.g., 0) in the EV mode, and the slow change data (e.g., water temperature) of the engine-related data tends to change slower.

Therefore, there is no need to acquire the engine-related data in a short cycle in the EV mode and, in Step S13, the acquisition of the engine-related data is stopped or performed in a long cycle depending on the data type. The HV-related data is set to be acquired in a short cycle. The stop of acquisition of data is in accordance with the communication amount plan, and the acquisition in the long or short cycle is in accordance with the communication frequency plan.

By stopping the acquisition of part of the data, the communication amount decreases and, by acquiring the other part of the data in the long period, the power consumption of the secondary battery 326 required for wireless communication can be decreased. The HV-related data can be obtained continuously. This characteristic is described in FIG. 6 as "communication amount: small (battery consumption: small) (data obtained)".

Further, the timing at which the HV mode is switched to the EV mode is set or estimated in advance in the travel plan, and setting and switching of communication conditions in accordance with the communication plan at this timing can set the data acquisition cycle to the long cycle at the timing of the actual slowing of the data change or at the slightly earlier timing. That is, instead of changing the cycle after the increase of the data change amount is detected as in JP 2017-226384 A, it is possible to change the cycle along with the increase of the data change amount, thus preventing the delay in setting of the cycle and decreasing the loss in the data acquisition. After Steps S12 and S13, the process returns to Step S8.

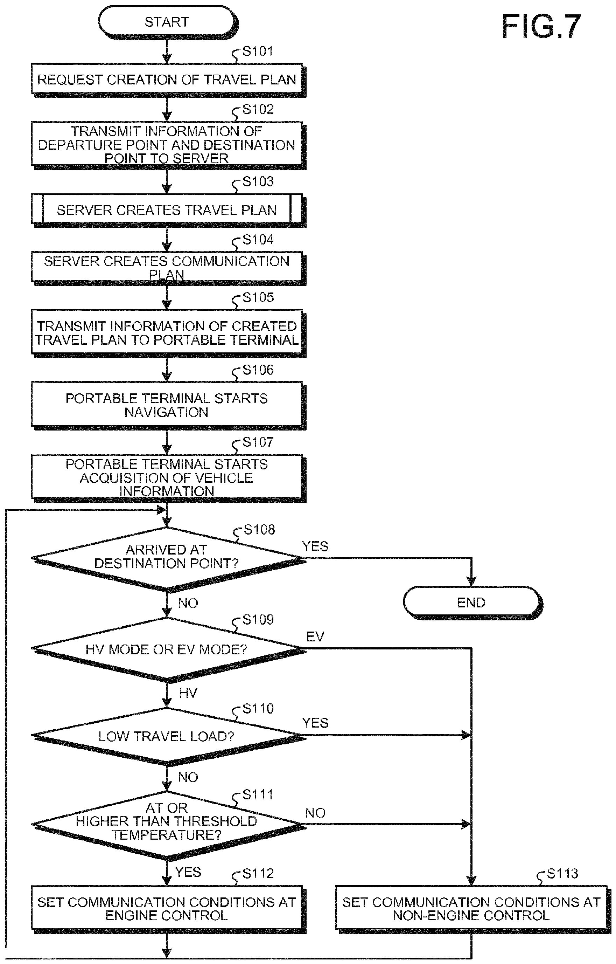

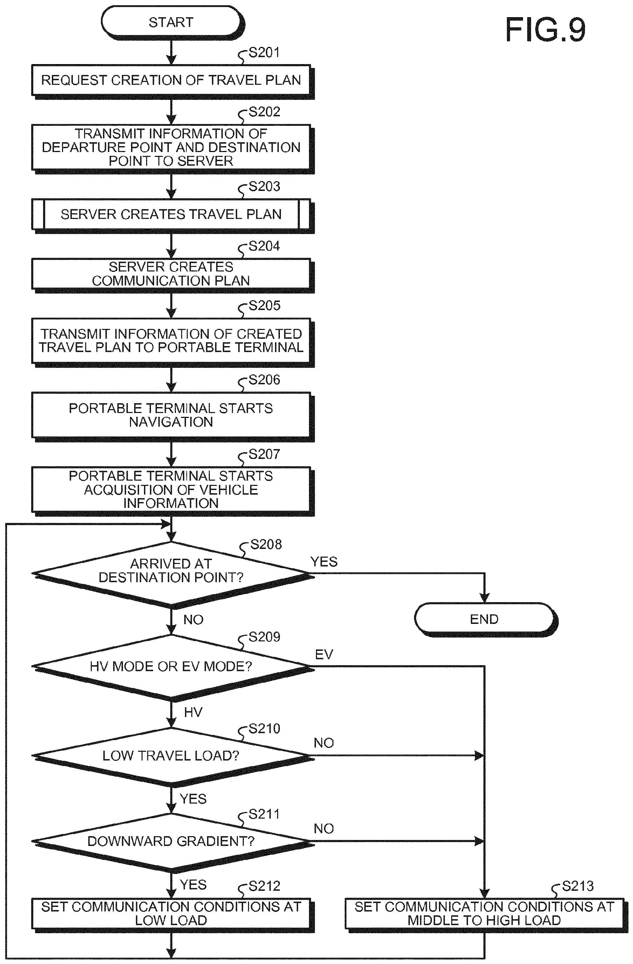

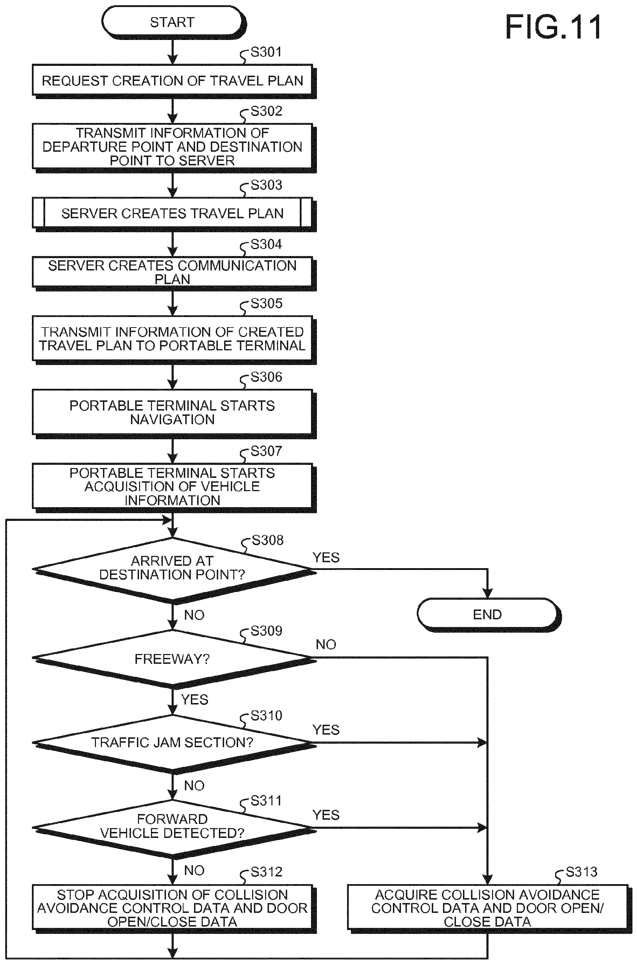

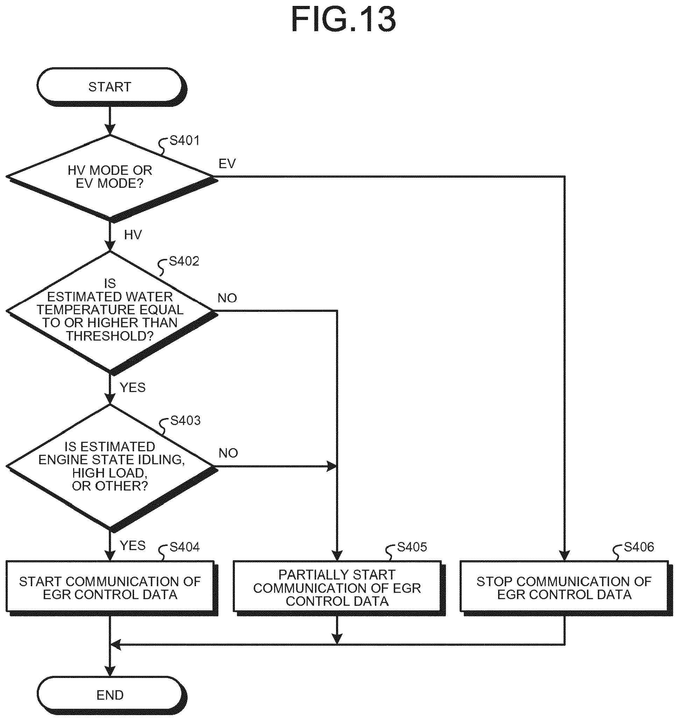

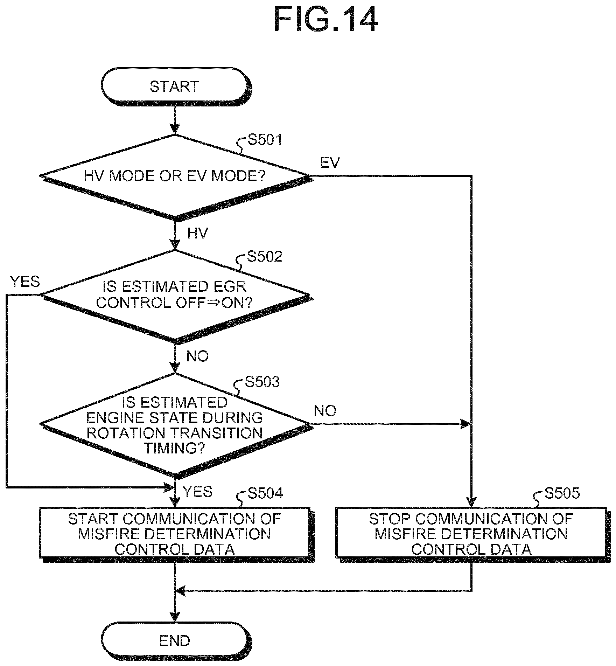

For ease of understanding in FIG. 5 and the above description, branching determination processing is specifically illustrated in Steps S9 and S10 when the switching of various travel states according to the travel stroke of the vehicle 100 is estimated. In practice, however, the switching can be done by referring to the communication plan described above. That is, when the switching point C of the travel mode is reached, the communication conditions can be set by simply referring to the communication plan in Step S10. In other words, in a broad sense, the branching determination processing of Steps S9 and S10 is the same as referencing the communication plan. This also applies to Steps S109 to Sill (see FIG. 7), Steps S209 to S211 (see FIG. 9), Steps S309 and S310 (see FIG. 11), Steps S401 to S403 (see FIG. 13), and Steps S501 to S503 (see FIG. 14).

Further, Steps S12 and S13 are processing steps for setting predetermined communication conditions at the time of switching estimation of the travel state of the vehicle 100. Therefore, these Steps S12 and S13 can be regarded as the communication amount planning and the communication frequency planning. This also applies to Steps S112 and S113 (see FIG. 7), Steps S212 and S213 (see FIG. 9), Steps S312 and S313 (see FIG. 11), Steps S404 to S406 (see FIG. 13), and Steps S504 and S505 (see FIG. 14).

Data Communication Method According to Second Embodiment

Next, a data communication method according to a second embodiment will be described with reference to FIGS. 7 and 8. FIG. 7 is a flowchart illustrating a data communication method in a data communication method according to the second embodiment, and FIG. 8 is a schematic time chart in the data communication method according to the second embodiment.

In a travel plan of the data communication method according to the second embodiment, as illustrated in FIG. 8, a travel load is predicted to be low, middle, or high for each of the travel sections k1 to k4, and the transition of an estimated temperature of the cooling water is determined in accordance with the travel load. The travel load is predicted from the map database 336.

Steps S101 to S108 in FIG. 7 are the same as Steps S1 to S8 described above. In Step S109, it is determined whether the travel mode here is the HV mode or the EV mode. If the travel mode is the HV mode (Step S109: HV), the process proceeds to Step S110. If the travel mode is the EV mode (Step S109: EV), the process proceeds to Step S113.

In Step S110, by referring to the information of the travel plan, the travel load predicted here is confirmed. When the travel load is low (Step S110: Yes), the process proceeds to Step S113, and when the travel load is middle or high (Step S110: No), the process proceeds to Step Sill.

In Step Sill, it is determined whether the estimated temperature of the cooling water is equal to or higher than a threshold temperature T0 of the engine control. When the estimated temperature is equal to or higher than the threshold temperature T0 (Step Sill: Yes), the process proceeds to Step S112. When the estimated temperature is less than the threshold temperature T0 (Step Sill: No), the process proceeds to Step S113. The engine 10 performs specific engine control when the water temperature is equal to or higher than the threshold temperature T0. Such engine control includes, for example, EGR control or VVT control. FIG. 8 illustrates an example in which the estimated temperature is expected to exceed the threshold temperature T0 at an intermediate point k3x of the travel section k3.

In Step S112, the communication conditions during the engine control are set. That is, the short cycle acquisition is set for the HV-related data and the engine-related data. That is, both the change speed and the change amount of the engine-related data tend to become large during the engine control, so that the short cycle acquisition is set to acquire the change state as much as possible without loss. Further, both the rapid change data and the slow change data are acquired as the vehicle information. The contents of the communication conditions to be set in Step S112 are the same as those in the case of Step S11 described above.

Thus, the timing to switch the non-engine control to the engine control is set or estimated in advance in the travel plan, and by setting and switching the communication conditions in accordance with the communication plan at this timing, the data acquisition cycle can be set to a short cycle at or slightly in advance of the actual rapid change of the rapid change data. Thus, there is no delay in setting, and the loss of data acquisition can be suppressed.

On the other hand, in Step S113, the communication conditions are set when the engine is not controlled. That is, acquisition of the engine-related data is partially canceled, and the long cycle acquisition is set for other part of the data. For the HV-related data, the short cycle acquisition is used. Step S113 is executed in the EV mode, or in the HV mode and when the estimated temperature is less than the threshold temperature T0. Such communication setting is performed because the engine control of the engine 10 is not performed as in the EV mode if the estimated temperature is less than the threshold temperature T0 even in the HV mode, and the necessity of data acquisition is low. For the engine-related data, it is effective to cancel the acquisition or acquire at the long cycle.

Further, the timing to switch the non-engine control to the engine control is set or estimated in advance in the travel plan, and by setting and switching the communication conditions in accordance with the communication plan at this timing, the data acquisition cycle can be set to a long cycle at or slightly in advance of the actual rapid change of the rapid change data, thus preventing the delay in setting of the cycle and decreasing the loss in the data acquisition.

Note that the flowchart of FIG. 7 illustrates Step S112 or S113 being always executed during traveling, but Step S112 or S113 may be executed only when the estimated temperature passes across the threshold temperature T0 in accordance with the communication plan. After Steps S112 and S113, the process returns to Step S108.

Data Communication Method According to Third Embodiment

Next, a data communication method according to a third embodiment will be described with reference to FIGS.

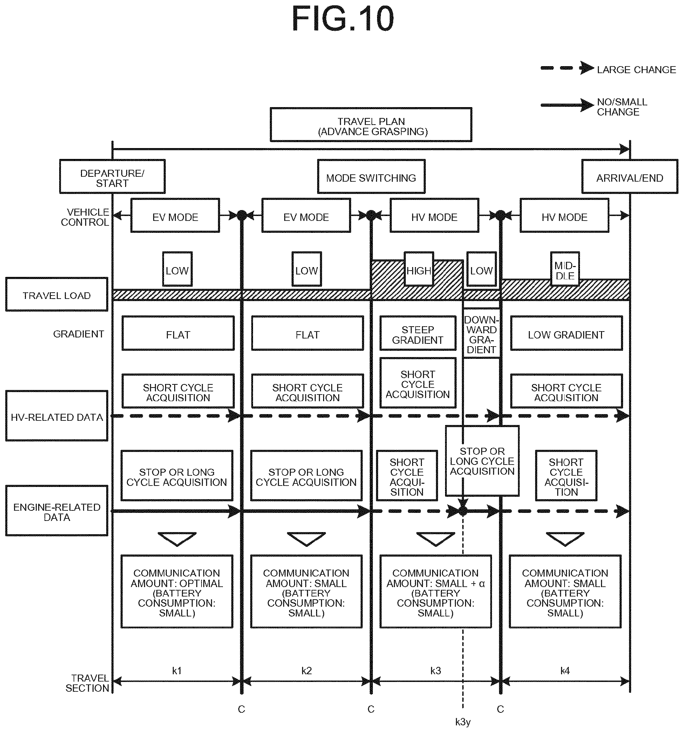

9 and 10. FIG. 9 is a flowchart illustrating a data communication method in a data communication method according to the third embodiment, and FIG. 10 is a schematic time chart in the data communication method according to the third embodiment.

In the travel plan in accordance with the data communication method according to the third embodiment, as illustrated in FIG. 10, the travel load is predicted to be low, middle, or high for each of the travel sections k1 to k4, and the gradient is predicted in accordance with the travel load. In addition, there may be a case where the travel load or the gradient changes within the same section across an intermediate point k3y as in the travel section k3. The change of the gradient is predicted from the map database 336.

Steps S201 to S210 in FIG. 9 are the same as Steps S101 to S110 described above. In Step S210, when it is confirmed that the vehicle is in the low load travel, the process proceeds to Step S211.

In Step S211, it is determined from the information included in the travel plan whether or not the gradient of the road is directed downward. In the case of the gradient is downward (Step S211: Yes, the second half of the travel section k3 in FIG. 10), the process proceeds to Step S212. If the gradient is flat or directed upward (including a steep gradient) (Step S211: No), the process proceeds to Step S213. Further, in Step S211, the travel mode is the HV mode and in the low load travel state, the gradient is substantially directed downward. Therefore, Step S211 is a confirmation step and may be deleted.

In Step S212, the communication conditions in the middle and high load states are set. In Step S212, the same setting as in the above Step S112 is performed to obtain a similar effect. Further, in Step S213, the communication conditions at low load are set. In this Step S213, the same setting as the above-mentioned Step S113 is performed, and the same effect is obtained. In the section k3 of FIG. 10, the communication amount and the communication frequency are switched before and after the intermediate point k3y, so that the characteristic of "small communication amount + $\alpha$" is mentioned as the feature of the section k3.

Note that the flowchart of FIG. 9 illustrates that either Step S212 or Step S213 is always executed during traveling, but Step S212 or Step S213 may be executed only at timing when the travel load passes between the low load and the middle to high load. After Steps S212 and S213, the process returns to Step S208.

Data Communication Method According to Fourth Embodiment

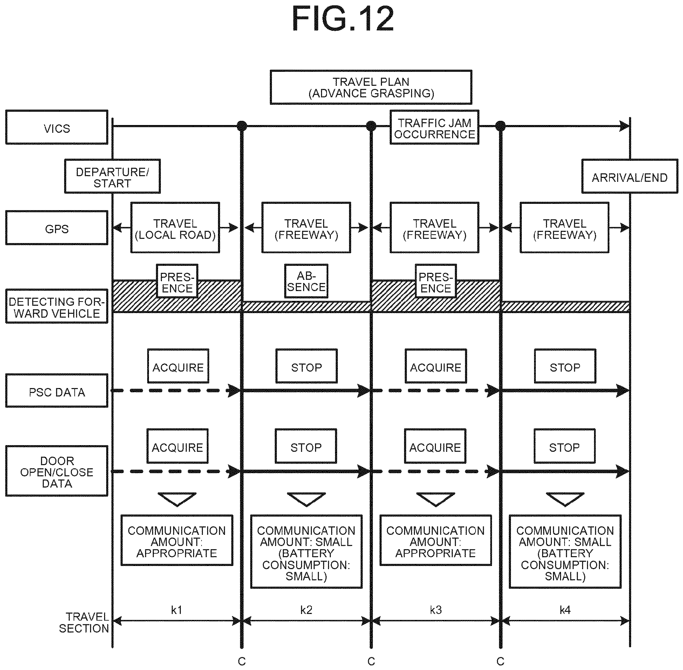

Next, a data communication method according to a fourth embodiment will be described with reference to FIGS. 11 and 12. FIG. 11 is a flowchart illustrating a data communication method in a data communication method according to the fourth embodiment, and FIG. 12 is a schematic time chart in the data communication method according to the fourth embodiment. The data communication method according to the fourth embodiment determines acquisition or stop of acquisition of collision avoidance control data and door open/close data in accordance with the travel plan of the vehicle 100 and the actual travel state. The collision avoidance control data is data relating to the above-described collision avoidance control. The door open/close data is data indicating whether an individual door is open or closed.

Steps S301 to S308 in FIG. 11 are the same as Steps S1 to S8 described above. In Step S309, the present position is confirmed by the function of the GPS reception unit 318 described above, and it is determined from the travel plan and map data whether the vehicle 100 is traveling on a freeway or a local road. If traveling on a freeway (Step S309: Yes), the process proceeds to Step S313. If traveling on a local road (Step S309: No), the process proceeds to Step S310.

In Step S310, it is determined whether the vehicle 100 is in a traffic jam section. The traffic jam section is reflected in the travel plan in accordance with the traffic jam information by the VICS function unit 319 described above. In the example illustrated in FIG. 12, the travel section k3 corresponds to a traffic jam section. In the traffic jam section (Step S310: Yes), the process proceeds to Step S313. If not in the traffic jam section (Step S310: No), the process proceeds to Step S311.

In Step S311, it is determined by the function of the inter-vehicle radar 216 whether there is another vehicle ahead. If there is another vehicle ahead (Step S311: Yes), the process proceeds to Step S313, and if not (Step S311: No), the process proceeds to Step S312. The forward vehicle detection in Step S311 may be ignored, for example, for a vehicle located at a sufficiently long distance.

In Step S312, acquisition of collision avoidance control data and door open/close data is stopped. That is, when traveling on the freeway, there is no traffic congestion, and there is no other vehicle ahead (travel sections k2 and k4 in FIG. 12), for example, travel is in a state of being in the cruise control mode and is stable. In such a case, the function of collision avoidance control does not work, and the door is hardly opened or closed. Therefore, in such a case, the acquisition of the collision avoidance control data and the door open/close data can be stopped to reduce the communication amount and decrease consumption of the secondary battery 326.

On the other hand, in Step S313, the collision avoidance control data and the door open/close data are acquired. That is, while traveling on the local road (travel section k1 in FIG. 12), traveling in a traffic jam section (travel section k3 in FIG. 12), or when another vehicle exists ahead (travel sections k1 and k3 in FIG. 12), the travel state often changes, and the function of collision avoidance control may operate or the door may open and close. In such a case, by acquiring the collision avoidance control data and the door open/close data, it is possible to grasp the situation after an incident. After Step S312 and Step S313, the process returns to Step S308.

The traffic jam information may be incorporated in advance into the travel plan by the VICS function to start acquisition of the collision avoidance control data and the door open/close data immediately when the traffic jam section is reached, thus preventing the loss of the data. Further, the acquisition can be stopped immediately when the traffic jam section is passed, thus decreasing the amount of data communication.

The branching judgment processing of Steps S309, S310, and S311 can be selected appropriately according to the design conditions, and may provide, for example, only Step S310 to confirm the traffic jam section while eliminating Steps S309 and S311. Further, for example, only Step S311 to detect and determine a forward vehicle by radar may be provided, and Steps S309 and S310 may be omitted. The data communication method according to the fourth embodiment determines the data communication/stop according to the combination of prediction of the vehicle state in the travel plan prepared in advance and detection of the vehicle state in real time by the radar or the GPS. In contrast, the prediction determination is performed in the case of providing only Step S310, and the actual detection determination is provided in the case of providing only Step S311. After Steps S312 and S313, the process returns to Step S308.

The data communication methods according to the first to fourth embodiments described above communicate all or a part of the data group collectively for the EV-related data and the engine-related data. However, it is also possible to determine the communication for individual data as in data communication methods according to fifth and sixth embodiments described below.

Data Communication Method According to Fifth Embodiment

FIG. 13 is a flow chart illustrating a data communication method for EGR control data. The EGR control data includes a plurality of pieces of data. In FIGS. 13 and 14, the processing for creating the travel plan and the communication plan at the start of traveling of the vehicle 100 (processing corresponding to Steps S1 to S8 in FIG. 5) is omitted, and only the processing during traveling is illustrated. Further, it is assumed that the branching determination processing is determined in accordance with the state estimated at that time with reference to the travel plan. Since the processing illustrated in FIGS. 13 and 14 is performed in accordance with the prediction of the travel plan, the switching timing of the data communication is appropriate without delay.

In Step S401, it is determined whether the travel mode is the HV mode or the EV mode. In the HV mode (Step S401: HV), the process proceeds to Step S402, and in the EV mode (Step S401: EV), the process proceeds to Step S406.

In Step S402, it is determined whether the estimated temperature of the cooling water is equal to or higher than a threshold. If it is equal to or higher than the threshold (Step S402: Yes), the process proceeds to Step S403, and if it is smaller than the threshold (Step S402: No), the process proceeds to Step S405. This threshold is, for example, about 60 degrees Celsius. Also, this threshold corresponds to, for example, the above-mentioned threshold temperature T0 (see FIG. 8).

In Step S403, it is determined whether the estimated engine state is an idle state or a high load state. In the idle state or the high load state (Step S403: Yes), the process proceeds to Step S404, and if not (Step S403: No), the process proceeds to Step S405.

In Step S404, communication is started for all EGR control data. In Step S405, communication is started for part of the EGR control data, and other data is not communicated. In Step S406, the communication for all EGR control data is stopped. The communication amount is large in Step S404, small in Step S406, and intermediate in Step S405. After Steps S404, S405, and S406, the current processing illustrated in FIG. 13 is ended.

When the travel load changes, the engine control may be switched. Therefore, the switching of the state is determined in Steps S402 and S403, and the reception and acquisition of the EGR control data is switched in Steps S404 and S405. When the engine 10 is assumed to be stable, the communication of the EGR control data is stopped in Step S406 and the communication amount is reduced, so that the consumption of the secondary battery 326 can decrease.

Data Communication Method According to Sixth Embodiment

FIG. 14 is a flowchart illustrating a data communication method for misfire determination control data of the engine 10. In the combustion stroke of the engine 10, it is necessary to secure sufficient fresh air. If the necessary amount of fresh air is not fed in the cylinder of the expansion stroke, a misfire may occur and lower the starting stability at the time of ignition start. The misfire determination control data is data related to determination control of such a misfire.

In Step S501, it is determined whether the travel mode is the HV mode or the EV mode. In the HV mode (Step S501: HV), the process proceeds to Step S502, and in the EV mode (Step S501: EV), the process proceeds to Step S505.

In Step S502, it is determined whether it is time to shift the estimated EGR control from OFF to ON. At the time of transition from OFF to ON (Step S502: Yes), the process proceeds to Step S504. If not (Step S502: No), the process proceeds to Step S503.

In Step S503, it is determined whether or not the estimated engine state is in transition time of rotation (i.e., during the change of the number of revolutions). In the transition time of rotation (Step S503: Yes), the process proceeds to Step S504. If not (Step S503: No), the process proceeds to Step S505. The transition time of rotation determined in Step S503 includes the start time of the engine 10.

In Step S504, communication of the misfire determination control data is started. In Step S505, the communication of the misfire determination control data is stopped. The communication amount increases in Step S504 and decreases in Step S505. After Steps S504 and S505, the current processing illustrated in FIG. 14 is ended.

When the travel load changes, the engine 10 may be in the transition time of rotation, causing the combustion to be unstable, so that the misfire may occur. Therefore, it is desirable to estimate the switching of the state in Steps S502 and S503, and to receive and acquire the misfire determination control data in Step S504. On the other hand, when the engine 10 is assumed to be stable, the communication of the misfire determination control data is stopped in Step S505, and the communication amount is reduced, so that the consumption of the secondary battery 326 can decrease.

In Step S505, the communication of the misfire determination control data may not be completely stopped, and may be acquired in a long cycle. In this case, in Step S504, the acquisition may be performed in a shorter cycle (e.g., 4 to 10 msec).

As described above, the communication control device in the present embodiment controls the communication between the portable terminal 306 and the in-vehicle communication device 304, and is implemented by one of the CPU 330 of the server 310, the CPU 312 of the portable terminal 306, and a CPU 200a of the electronic control unit 200, or by cooperating at least one of the above CPUs.

Since the server 310 has a larger processing capacity than the portable terminal 306, the processing speed can be increased when the CPU 330 of the server 310 is positioned as a communication control device. Further, the server 310 can perform centralized processing on a plurality of portable terminals 306 and a plurality of vehicles 100. Further, the processing load of the portable terminal 306 can be reduced.

When the CPU 312 of the portable terminal 306 is positioned as a communication control device, most processing of the data communication system 300 is completed in the vehicle 100 to decrease the degree of dependence on the communication network 308 and the server 310, while decreasing the communication amount between the portable terminal 306 and the communication network 308.

The communication control device creates or acquires the travel plan of the vehicle 100 and, at the time of switching the travel state in the travel plan, creates the communication plan to switch at least one of the communication amount and the communication frequency between the in-vehicle communication device 304 and the portable terminal 306 according to the changing of the travel conditions. This makes it possible to obtain changes in data in detail without delay in switching of communication conditions. Further, depending on the travel condition, the consumption of the battery can be reduced by decreasing the communication amount or making the communication frequency long.

Although the portable terminal 306 and the in-vehicle communication device 304 can be communicated bidirectionally, the communication plan of the present embodiment is the plan from the in-vehicle communication device 304 to the portable terminal 306 regarding at least one of the communication amount or the communication frequency to allow data communication related to the vehicle information of the vehicle 100. There are various types of vehicle information, and by setting the switching time in advance according to the communication plan, it is possible to further decrease the battery consumption and prevent data loss.

The data communication methods according to the first to sixth embodiments may be applied independently, or two or more methods may be applied together. For example, with respect to the data communication method according to the first embodiment (see FIG. 5), the threshold temperature determination processing (Step Sill in FIG. 7) of the data communication method according to the first embodiment, or the downward gradient determination processing (Step S211 in FIG. 9) of the data communication method according to the second embodiment may be added.

Creating Travel Plan

Next, a procedure for creating the travel plan of the vehicle 100 will be described. The communication plan is created in accordance with the travel plan as described above.

The vehicle 100 is a hybrid type vehicle capable of switching the travel mode between the EV mode and the HV mode. To decrease the fuel consumption, the EV mode is set preferentially as the travel mode when the charge amount of the in-vehicle battery 50 is equal to or greater than a predetermined threshold.

The engine 10 tends to lower its thermal efficiency as the engine load is smaller. Therefore, the vehicle 100 is caused to travel with the travel mode set to the EV mode when the start/stop is frequently repeated or the low-speed travel continues in such a travel section as with many traffic lights or frequent traffic jam or the like.

The vehicle 100 is caused to travel in the HV mode as the travel mode when the traveling in the travel section with the engine load region having a good thermal efficiency is possible, such as a travel section in which steady travel can continue while maintaining vehicle speed at a certain level or more.

Therefore, in a case of the hybrid vehicle capable of switching the travel mode between the EV mode and the HV mode, an effective means to decrease the fuel amount required for the travel would be to create the travel plan to determine in which travel section on the expected route the vehicle should travel in the EV mode in one-trip (between ON and OFF of a start switch 214 of the vehicle) to the destination point, and switch the travel mode according to the travel plan.

However, such a conventional travel plan has optimized one-trip travel, and does not take into consideration the extra consumption of fuel to warm up the exhaust purification catalyst of the engine 10. That is, when the engine 10 is started at the beginning of each trip, an extra amount of fuel is consumed to facilitate warm-up of the catalyst to achieve the exhaust performance. Such a fuel consumption for the warm-up of the catalyst may not be considered in creating the travel plan.

Here, consider traveling the entire travel route consisting of a plurality of trips, such as a round trip between home and a working place or a circulating trip through a plurality of destination points (transit points) to return to the initial departure point such as home (the former case includes two trips of outward and return trips, and the latter case includes three trips if, for example, there are two destination points).

For example, in the case of the round trip between home and a working place, the conventional travel plan has optimized the travel on each trip of the outward trip and the return trip. Therefore, the HV section (which is the travel section where the travel mode is set to the HV mode) may be set on the travel route of both the outward trip and the return trip. Accordingly, the fuel is additionally consumed for warm-up of the catalyst at least once in both the outward trip and the return trip.

On the other hand, if the travel of the entire travel route consisting of a plurality of trips is optimized so that the entire travel route of either the outward trip or the return trip can be traveled in the EV mode, as the number of warm-up operations for the catalyst is reduced to one, thus decreasing the fuel consumption of the warm-up operations for catalyst. As a result, looking at the total fuel consumption during the round trip between home and the working place, the total fuel consumption may be reduced as the fuel consumption for the warm-up of the catalyst being reduced, when compared to the case where the one-trip travel is optimized in both the outward trip and the return trip, as in the conventional travel plan.

Therefore, in the present embodiment, it is possible to create a travel plan capable of reducing the number of warm-up operations for catalyst. Hereinafter, the creation of the travel plan according to this embodiment will be described with reference to FIGS. 15A to 17C.

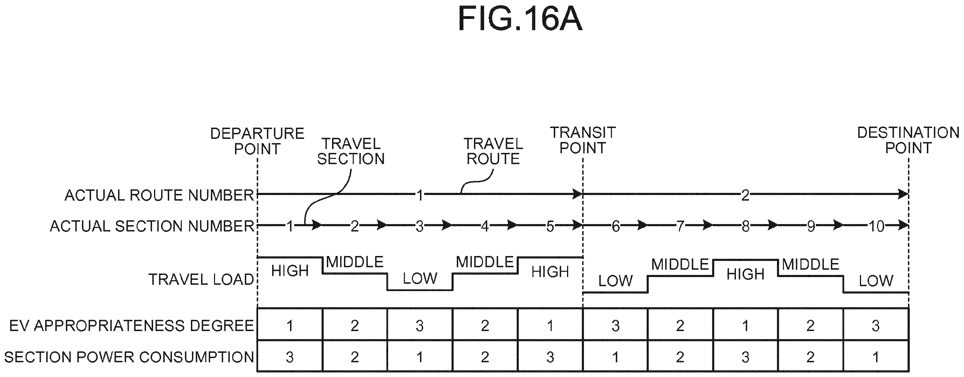

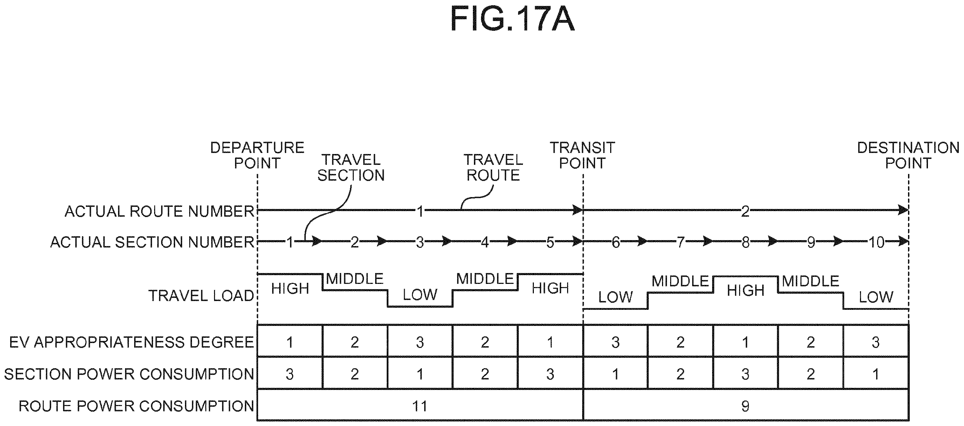

FIGS. 15A and 15B are flowcharts for explaining creation of a travel plan according to the present embodiment. FIGS. 16A to 16C are diagrams for explaining creation of a first travel plan (section travel plan) in which the one-trip travel is optimized. In the first travel plan, the EV mode is set in a plurality of travel sections of each trip (travel route) according to the EV appropriateness degree in descending order and within the range of the available power amount of the in-vehicle battery 50. FIGS. 17A to 17C are diagrams for explaining creation of a second travel plan (route travel plan) in which a plurality of trips are optimized. In the second travel plan, the EV mode is set for each trip according to the power consumption in ascending order and within the range of the available power amount of the in-vehicle battery 50.

In Step S601 of FIG. 15A, the CPU 330, which reads and executes the travel plan creation program 334, sets one or more transit points on a predicted route between the departure point and the destination point, as illustrated in FIG. 16A, to roughly divide the predicted route into a plurality of travel routes, and further divides each travel route into a plurality of travel sections. Then, an actual section number i (i = 1,..., n: n = 10 in the example illustrated in FIG. 16A) is set for each travel section sequentially from the departure point, while an actual route number j: (j = 1,..., m: m = 2 in the example illustrated in FIG. 16A) is set for each travel route sequentially from the departure point.

Here, the departure point (and the destination point) is a main storage place of the vehicle 100 such as, for example, a parking lot at home. If the vehicle 100 for which the travel plan is created is a plug-in hybrid vehicle as in this embodiment, the departure point or the destination point may be a plug-in chargeable place.

The transit point is the end point of one trip, and is, for example, a destination point set at the departure point (future destination). Further, for example, in the case of a vehicle that circulates a plurality of predetermined destination points, each destination point can be set as a transit point, and in the case of a vehicle used for commuting to a working place or school, it is possible to set the work place or school as a transit point. Setting the transit point on the predicted route allows creation of the travel plan corresponding to a plurality of trips.

In Step S602, the CPU 330 calculates the travel load of each travel section in accordance with the road information (e.g., gradient, road type, speed limit, average curvature, etc.) of each travel section. The travel load is divided into, for example, three stages of low, middle, and high. Then, as illustrated in FIG. 16A, the CPU 330 calculates an EV appropriateness degree of each travel section in accordance with the travel load of each travel section, and an estimated power consumption in each travel section (which is referred to as a "section power consumption" hereinafter) when traveling each travel section in the EV mode. The EV appropriateness degree is an index indicating how much each travel section is suitable for EV traveling, and is set to a higher value (i.e., suitable for EV traveling) when the travel load of each travel section is lower.

For ease of understanding, the EV appropriateness degree is indicated in a simplified form in FIG. 16A as being classified from 1 (low EV appropriateness degree) to 3 (high EV appropriateness degree) in accordance with the travel load of each travel section. Further, the section power consumption is also indicated in a simplified form as being classified from 1 (small section power consumption) to 3 (large section power consumption) according to the size of the section power consumption.

In Step S603, the CPU 330 calculates an estimated power consumption (hereinafter referred to as "total power consumption") TE when the predicted route is traveled in the EV mode in accordance with the section power consumption of each travel section.

In Step S604, the CPU 330 determines whether or not the amount of power of the in-vehicle battery 50 available for EV travel (hereinafter referred to as "available power") CE is equal to or greater than the total power consumption TE in accordance with the battery charge amount. When the available power CE is equal to or greater than the total power consumption TE (Step S604: Yes), the CPU 330 proceeds to the processing of Step S605. Meanwhile, when the available power CE is smaller than the total power consumption TE (Step S604: No), the CPU 330 proceeds to the processing of Step S606.

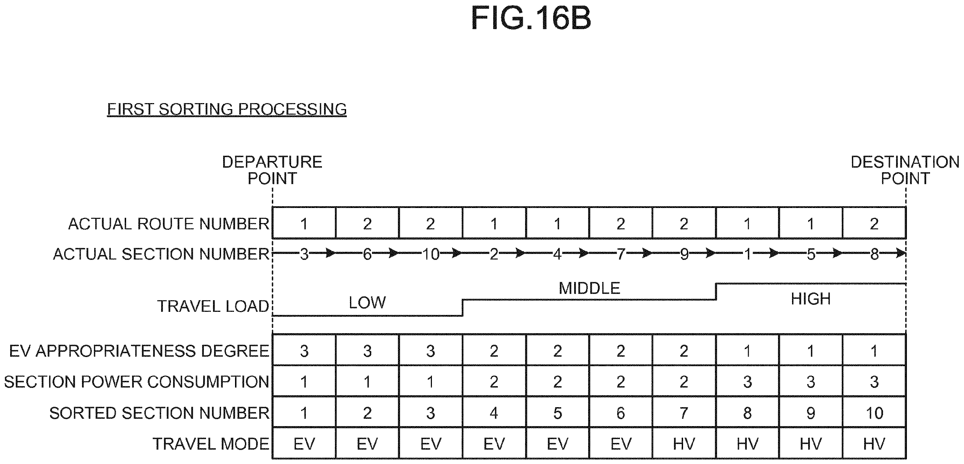

In Step S606, as illustrated in FIG. 16B, the CPU 330 performs first sorting processing to rearrange the travel sections and, in order of the rearranged travel sections, sets the sorted section number i (i = 1,..., n: set n = 10 in the example illustrated in FIG. 16B) for each travel section. Specifically, as illustrated in FIG. 16B, the CPU 330 ignores the travel route to rearrange the travel sections according to the EV appropriateness degree in descending order, and rearranges the travel sections having the same EV appropriateness degree according to the section power consumption in ascending order.

In Step S607, the CPU 330 determines the presence of a sorted section number k which satisfies an inequality expression (1) below. Note that $DE_i$(i = 1 to n) indicates an accumulated value of the section power consumption of the travel sections by adding the section power consumption of the travel sections in order from the travel section having a high EV appropriateness degree and a small power consumption.

$$DE_k \leq CE < DE_{k+1} \tag{1}$$

In the inequality expression (1), $DE_k$ is a sum (accumulated value) of the section power consumption of the travel sections from the sorted section numbers 1 to k, and $DE_{k+1}$ is a total value (sum) of the section power consumption of the travel sections from the sorted section numbers 1 to k+1.

Specifically, the CPU 330 determines the presence of the sorted section number k satisfying the inequality expression (1) if the section power consumption $DE_l$ of the travel section with the sorted section number k being 1 is larger than the available power CE. If there is no travel section that can be traveled in the EV mode (Step S607: No), the CPU 330 proceeds to the processing of Step S608. Meanwhile, the CPU 330 determines the presence of the sorted section number k satisfying the inequality expression (1) (Step S607: Yes), if the section power consumption $DE_l$ of the travel section with the sorted section number k being 1 is equal to or smaller than the available power CE, and proceeds to the processing of Step S609.

In Step S609, the CPU 330 calculates the sorted section number k satisfying the inequality expression (1). For example, in the example illustrated in FIG. 16B, the EV mode traveling is possible within the range of the available power CE until the sorted section number k = 6. However, the power of the in-vehicle battery 50 becomes insufficient at k = 7, and the EV mode traveling is not possible. Thus, the sorted section number k satisfying the inequality (1) is k = 6.

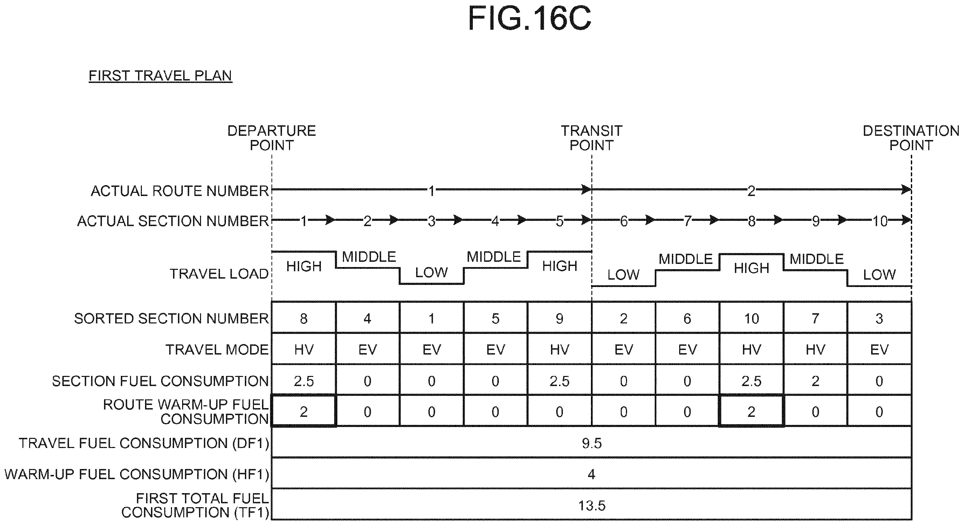

In Step S610, as illustrated in FIG. 16B, the CPU 330 sets the travel sections of the sorted section numbers 1 to k (k = 6 in the example illustrated in FIG. 16B) as the EV sections (the travel sections with the travel mode set to the EV mode), and the travel sections of the sorted section numbers k + 1 to n as the HV sections. Subsequently, the CPU 330 creates a first travel plan (section travel plan) by rearranging the travel sections again in order of actual section numbers, as illustrated in FIG. 16C.

In Step S611, as illustrated in FIG. 16C, the CPU 330 calculates an estimated fuel consumption for traveling in each HV section (hereinafter referred to as "section fuel consumption") in accordance with the road information of the travel sections set as the HV sections in the first travel plan, and then calculates a travel fuel consumption DF1, which is a sum of the section fuel consumption, of the first travel plan.

Further, the CPU 330 calculates an estimated fuel amount consumed for the warm-up of the catalyst (hereinafter referred to as "route warm-up fuel consumption") of each travel route in which the HV sections are set in the first travel plan, and then calculates a warm-up fuel consumption HF1, which is a sum of the route warm-up fuel consumption, of the first travel plan. In the present embodiment, as illustrated in FIG. 16C, it is assumed that the fuel for warm-up of the catalyst is consumed in the travel section which is switched to the HV mode first in each travel route.

In Step S612, the CPU 330 calculates an estimated fuel amount TF1 consumed when the predicted route is traveled while the travel mode being switched according to the first travel plan (hereinafter referred to as "first total fuel consumption"). Specifically, as illustrated in FIG. 16C, the CPU 330 adds the travel fuel consumption DF1 to the warm-up fuel consumption HF1 of the first travel plan to calculate the first total fuel consumption TF1.

In Step S613, as illustrated in FIG. 17A, the CPU 330 calculates an estimated power consumption of each travel route (hereinafter referred to as "route power consumption") when each travel route is traveled in the EV mode in accordance with the section power consumption of each travel section. FIG. 17A indicates a sum of the section power consumption of the travel sections for each travel route, in a simplified manner, as the route power consumption.

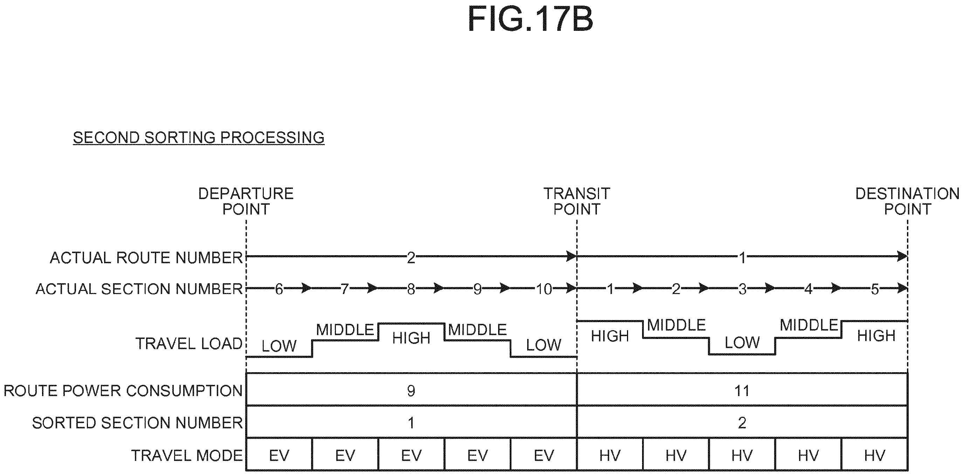

In Step S614, as illustrated in FIG. 17B, the CPU 330 performs a second sorting processing to rearrange the travel routes and, in order of the rearranged travel routes, sets the sorted route number i (i = 1,..., n) for each travel route. Specifically, as illustrated in FIG. 17B, the CPU 330 rearranges the travel routes according to the route power consumption in ascending order.

In Step S615, the CPU 330 determines the presence of a sorted route number k which satisfies an inequality expression (2) below. Note that $RE_i$(i = 1 to n) indicates an accumulated value obtained by adding the route power consumption of the travel routes in order from the travel route having a small route power consumption.

$$RE_k \leq CE < RE_{k+1} \qquad\qquad\qquad (2)$$

In the inequality expression (2), $RE_k$ is a sum (accumulated value) of the route power consumption of the travel routes from the sorted route numbers 1 to k, and $RE_{k+1}$ is a sum (accumulated value) of the route power consumption of the travel routes from the sorted route numbers 1 to k + 1.

Specifically, the CPU 330 determines the presence of the sorted route number k satisfying the inequality expression (2) if the route power consumption $RE_l$ of the travel route with the sorted route number k being 1 is larger than the available power CE. If there is no travel route that can be traveled in the EV mode (Step S615: No), the CPU 330 proceeds to the processing of Step S621. Meanwhile, if the route power consumption $RE_l$ of the travel route when the sorted route number k is 1 is equal to or smaller than the available power CE, the CPU 330 determines the presence of the sorted route number k satisfying the inequality expression (2) (Step S607: Yes), and proceeds to the processing of Step S616.

In Step S616, the CPU 330 calculates the sorted route number k satisfying the inequality expression (2). For example, in the example illustrated in FIG. 17B, the EV mode travel is possible within the range of the available power CE until the sorted route number k = 1, but the power of the in-vehicle battery 50 becomes insufficient at k = 2 and the vehicle cannot travel in the EV mode. Therefore, the sorted route number k satisfying the inequality expression (2) is k = 1.

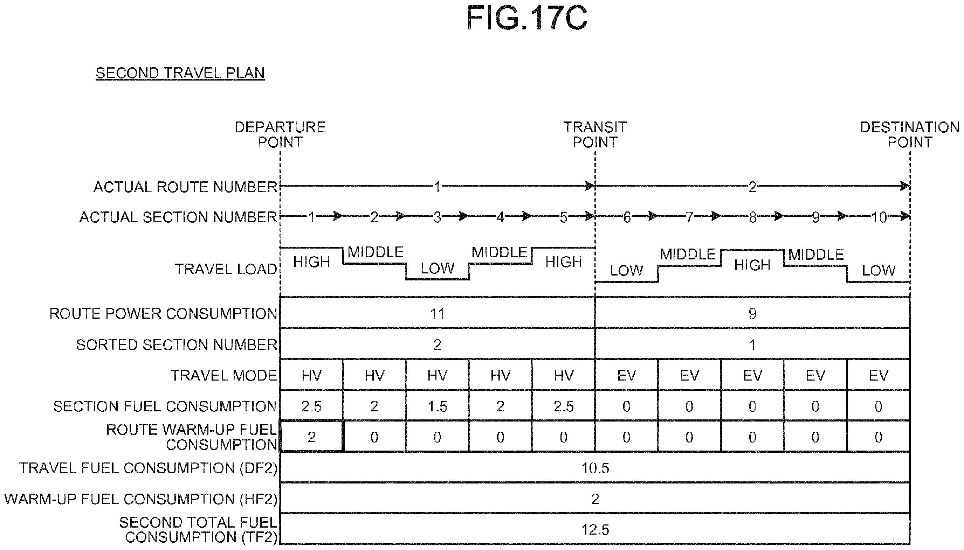

In Step S617, as illustrated in FIG. 17B, the CPU 330 sets the travel routes up to the sorted route number k (k = 1 in the example illustrated in FIG. 17B) as the EV routes in which all travel sections on the travel route are the EV sections, while setting the travel routes of the sorted route numbers from k + 1 to n as the HV routes in which all travel sections on the travel route are the HV sections. Then, the CPU 330 creates a second travel plan (route travel plan) by rearranging the travel routes again in order of actual route numbers, as illustrated in FIG. 17C.

In Step S618, as illustrated in FIG. 17C, the CPU 330 calculates the section fuel consumption of each HV section in accordance with the road information of the travel sections set as the HV sections in the second travel plan, and then calculates a travel fuel consumption DF2, which is a sum of the section fuel consumption, of the second travel plan.

Further, the CPU 330 calculates the route warm-up fuel consumption of each travel route in which the HV sections are set in the second travel plan, and then calculates a warm-up fuel consumption HF2, which is a sum of the route warm-up fuel consumption, of the second travel plan. As illustrated in FIG. 17C, in the second travel plan, a route warm-up fuel consumption occurs only on the travel route having an actual route number 1.

In Step S619, the CPU 330 calculates an estimated fuel amount TF2 consumed when the predicted route is traveled while the travel mode being switched according to the second travel plan (hereinafter referred to as "second total fuel consumption"). Specifically, as illustrated in FIG. 17C, the CPU 330 adds the travel fuel consumption DF2 to the warm-up fuel consumption HF2 of the second travel plan to calculate the second total fuel consumption TF2.

In Step S620, the CPU 330 compares the first total fuel consumption TF1 to the second total fuel consumption TF2 and, if the first total fuel consumption TF1 is larger (Step S620: Yes), proceeds to the processing of Step S622, while proceeding to the processing of Step S621 if the second total fuel consumption TF2 is larger (Step S620: No).

In Step S621, the CPU 330 adopts the first travel plan and performs switching control of the travel mode according to the first travel plan.

In Step S622, the CPU 330 adopts the second travel plan and performs switching control of the travel mode in accordance with the second travel plan.

As illustrated in FIGS. 16C and 17C, the travel fuel consumption DF1 of the first travel plan that optimizes one-trip travel is smaller than the travel fuel consumption DF2 of the second travel plan that optimizes the travel of multiple trips. However, when considering the warm-up fuel consumption HF1 and HF2 of the individual travel plans, the warm-up of the catalyst is needed twice in the first travel plan, so that it can be found that the first total fuel consumption TF1 is larger than the second total fuel consumption TF2.

As described above, the vehicle 100 (hybrid vehicle) includes the engine 10, the chargeable/dischargeable in-vehicle battery 50, and the second rotating electric machine 40 (rotating electric machine) driven by the power of the in-vehicle battery 50. The vehicle 100 travels in accordance with the travel plan created by the CPU 330 that reads and executes the travel plan creation program 334. The CPU 330 includes the travel plan creation unit that sets one or more transit points on the predicted route from the departure point to the destination point, divides the predicted route into a plurality of travel routes, and further divides each travel route into a plurality of travel sections to create the travel plan that sets either the EV mode, in which the power of the in-vehicle battery 50 is used as the main power source, or the HV mode, in which the engine 10 is used as the main power source, is used for the travel. The CPU 330 also includes the travel mode switching unit that switches the travel mode in accordance with the travel plan.

The travel plan creation unit is configured to be able to create a travel plan in which the travel mode of all travel sections in at least one travel route are set to the EV mode.

As a result, in the travel route (EV route) in which the travel mode of all travel sections in the travel route are set to the EV mode, there is no need to warm up the catalyst, so that it is possible to decrease number of the warm-up of the catalyst and decrease the amount of fuel consumed to warm up the catalyst.

Further, the travel plan creation unit includes a route power consumption calculation unit that calculates the route power consumption which is an estimated power consumed when each travel route is traveled in the EV mode. The travel plan creation unit sets the travel mode of all travel sections in the travel route to the EV mode in order from the travel route having a small route power consumption. Further, the travel plan creation unit is configured to create the second travel plan (route travel plan) by setting the travel mode of all the travel sections of the travel route to the HV mode in or after the travel route in which the accumulated value $RE_k$ obtained by adding the route power consumption of the travel route in order from the travel route (in or after the travel route of the sorted route number k + 1) having a small route power consumption exceeds the available power CE of the in-vehicle battery 50.

As a result, the travel route can be set as the EV route in order from the travel route having a high possibility of traveling in the EV mode. That is, the number of travel routes that can be set as the EV route can increase as much as possible, so that the travel plan capable of minimizing the number of warm-ups of the catalyst is created to decrease the fuel consumption used for the warm-up of the catalyst.

Further, the travel plan creation unit includes an appropriateness calculation unit that calculates the EV appropriateness degree (appropriateness degree) when traveling in the travel section in the EV mode, and a section power consumption calculation unit that calculates a section power consumption, which is an estimated power consumed when each travel section is traveled in the EV mode. The travel plan creation unit is configured to create the first travel plan (section travel plan) in which the travel mode is set to the HV mode in the travel sections in order from the travel section having the high appropriateness degree and the small section power consumption, and the travel mode is set to the EV mode in the travel sections in and after the travel section (in and after the travel section having the sorted section number k + 1) having the accumulated value $DE_k$ of the section power consumption, which is accumulated in order from the travel section having the high appropriateness degree and the small section power consumption, exceeding the available power CE of the in-vehicle battery 50.

Then, the travel mode switching unit is configured to switch the travel mode according to the second travel plan, when the first total fuel consumption TF1, which is the sum of the fuel consumed in each travel route in which the travel sections set to the HV mode are present, is greater than the second total fuel consumption TF2, which is the sum of the fuel consumed in each travel route in which all travel sections are set to the HV mode. The first total fuel consumption TF1 and the second total fuel consumption TF2 are the sum of the fuel consumed for traveling and the amount of fuel consumed for the warm-up of the exhaust purification catalyst of the engine 10.

Thus, the possibility of decreasing the fuel consumption can be decreased by decreasing the number of warm-up of the catalyst.

Further, the travel plan optimizing the plurality of trips can be created, as the transit point is regarded as the end point of one trip of the vehicle 100.

In the present disclosure, at switching timing of the travel state in the travel plan of the vehicle, a communication plan is created in which at least one of the communication amount and the communication frequency between the in-vehicle communication device and the mobile communication device is switched according to the change state of the travel state. This makes it possible to obtain changes in data in detail without delay in switching of communication conditions. Further, depending on the travel condition, the consumption of the battery can be reduced by decreasing the communication amount or making the communication frequency long.

According to the present disclosure, at least one of the communication amount and the communication frequency may be appropriately switched in accordance with switching time of a travel mode.

According to the present disclosure, it may be possible to decrease the number of catalyst warm-up and decrease the amount of fuel consumed for the catalyst warm-up.

According to the present disclosure, it may be possible to switch the travel mode in accordance with a travel plan that can minimize the total amount of fuel consumption during a travel according to the predicted route.

According to the present disclosure, at least one of the communication amount and the communication frequency may be appropriately switched according to the switching of engine control.

According to the present disclosure, at least one of the communication amount and the communication frequency may be appropriately switched in accordance with a change in road conditions.

According to the present disclosure, a highly accurate travel plan and communication plan may be obtained according to the travel situation.

According to the present disclosure, the mobile communication device may subjectively perform communication control.

This reduces the processing load on the mobile communication device.

There are various types of vehicle information, and by setting the switching time in advance according to the communication plan, it may be possible to further decrease the battery consumption and prevent data loss.

Although the disclosure has been described with respect to specific embodiments for a complete and clear disclosure, the appended claims are not to be thus limited by this disclosure.

**Claims**

1. A communication control device for controlling communication of an in-vehicle communication device (304) which is communicable with a mobile communication device (306), the communication control device comprising:

   a travel plan creation unit (200a, 330, 312) configured to create or acquire a travel plan of a vehicle equipped with the in-vehicle communication device (304) and create a communication plan to switch at least one of a communication amount and a communication frequency between the in-vehicle communication device (304) and the mobile communication device (306) at switching time of a travel state of the travel plan according to a mode change of the travel state, wherein
   the vehicle (100) is a hybrid type vehicle including an engine (10), a chargeable and dischargeable in-vehicle battery (50), and a rotating electric machine (30; 40) driven by power of the in-vehicle battery (50), wherein
   the travel plan creation unit (200a, 330, 312) is configured to create the travel plan by setting either an EV mode in which the power of the in-vehicle battery (50) is used as a main power source or an HV mode in which the engine is used as the main power source as a travel mode to be used depending on a travel section, and wherein the switching time is switch time of the set travel mode.

2. The communication control device according to claim 1, wherein the travel plan creation unit (200a, 330, 312) is configured to
   set one or more transit points on a predicted route from a departure point to a destination point,
   divide the predicted route into a plurality of travel routes divided by the transit points,
   further divide each of the travel route into a plurality of travel sections, and
   set the travel mode of all of the travel sections in at least one travel route to the EV mode.

3. The communication control device according to claim 2, wherein the travel plan creation unit (200a, 330, 312) includes a route power consumption calculation unit (200a, 330, 312) configured to calculate a route power consumption for each travel section, which is an estimated power consumed when each of the travel sections is traveled in the EV mode, and
   the travel plan creation unit (200a, 330, 312) is configured to set the travel mode of the travel sections in the travel route to the EV mode in ascending order of the route power consumption for each travel section, until the accumulated value obtained by adding the route power consumption of said travel sections exceeds an available power of the in-vehicle battery (50), and set the travel mode of the other travel sections of the travel route to the HV mode.

4. The communication control device according to any one of claims 1 to 3, wherein another switching time is switch time of engine control according to a predicted travel load.

5. The communication control device according to any one of claims 1 to 4, wherein another switching time is changing time of a predicted road condition.

6. The communication control device according to any one of claims 1 to 5, wherein the communication control device is configured to recreate and update the travel plan according to the travel of the vehicle (100).

7. The communication control device according to any one of claims 1 to 6, wherein the communication control device is mounted on the mobile communication device (306).

8. The communication control device according to any one of claims 1 to 6, wherein the communication control device is communicable with the mobile communication device (306) and configured to transmit the created travel plan to the mobile communication device (306).

9. The communication control device according to any one of claims 1 to 8, wherein the communication plan is a plan of at least one of the communication amount and the communication frequency for communicating data related to vehicle information of the vehicle (100) from the in-vehicle communication device (304) to the mobile communication device (306).

10. A communication system, comprising:

an in-vehicle communication device (304) provided in a vehicle (100);
a mobile communication device (306) capable of data communication with the in-vehicle communication device (304) ;
a server configured to control the mobile communication device (306) via a communication network;
a communication plan creation unit (200a, 330, 312) configured to:

create or acquire a travel plan of the vehicle (100) equipped with the in-vehicle communication device (304); and
create a communication plan to switch at least one of a communication amount and a communication frequency between the in-vehicle communication device (304) and the mobile communication device (306) at switching time of a travel state of the travel plan according to a mode change of the travel state, wherein

the vehicle (100) is a hybrid type vehicle including an engine (10), a chargeable and dischargeable in-vehicle battery (50), and a rotating electric machine (30; 40) driven by power of the in-vehicle battery (50), wherein the communication plan creation unit (200a, 330, 312) is configured to create the travel plan by setting either an EV mode in which the power of the in-vehicle battery (50) is used as a main power source or an HV mode in which the engine is used as the main power source as a travel mode to be used depending on a travel section, and wherein
the switching time is switch time of the set travel mode.

11. A method of controlling communication of an in-vehicle communication device (304) communicable with a mobile communication device (306), the method comprising:

creating or acquiring a travel plan of a vehicle (100) equipped with the in-vehicle communication device (304), and storing the travel plan in a storage unit; and
creating a communication plan to switch at least one of a communication amount and a communication frequency between the in-vehicle communication device (304) and the mobile communication device (306) at switching time of a travel state of the travel plan according to a mode change of the travel state, wherein
the vehicle (100) is a hybrid type vehicle including an engine (10), a chargeable and dischargeable in-vehicle battery (50), and a rotating electric machine (30; 40) driven by power of the in-vehicle battery (50), wherein
creating the travel plan further comprises creating the travel plan by setting either an EV mode in which the power of the in-vehicle battery (50) is used as a main power source or an HV mode in which the engine is used as the main power source as a travel mode to be used depending on a travel section, and wherein
the switching time is switch time of the set travel mode.

**Patentansprüche**

1. Kommunikationssteuervorrichtung zum Steuern der Kommunikation einer fahrzeuginternen Kommunikationsvorrichtung (304), die mit einer Mobilkommunikationsvorrichtung (306) kommunizieren kann, wobei die Kommunikationssteuervorrichtung Folgendes umfasst:

eine Reiseplanerzeugungseinheit (200a, 330, 312), die konfiguriert ist, einen Reiseplan eines Fahrzeugs, das mit der fahrzeuginternen Kommunikationsvorrichtung (304) ausgestattet ist, zu erzeugen oder zu erfassen und einen Kommunikationsplan zu erzeugen, um wenigstens eines aus einer Kommunikationsmenge und einer Kommunikationshäufigkeit zwischen der fahrzeuginternen Kommunikationsvorrichtung (304) und der Mobilkommunikationsvorrichtung (306) zur Schaltzeit eines Fahrzustands des Reiseplans gemäß einer Betriebsartänderung des Fahrzustands umzuschalten, wobei

das Fahrzeug (100) ein Fahrzeug vom Hybridtyp ist, das eine Kraftmaschine (10), eine aufladbare und entladbare fahrzeuginterne Batterie (50) und eine rotierende elektrische Maschine (30; 40), die durch die Energie der fahrzeuginternen Batterie (50) angetrieben wird, enthält, wobei

die Reiseplanerzeugungseinheit (200a, 330, 312) konfiguriert ist, den Reiseplan durch Einstellen entweder einer EV-Betriebsart, in der die Energie der fahrzeuginternen Batterie (50) als eine Hauptenergiequelle verwendet wird, oder einer HV-Betriebsart, in der die Kraftmaschine als die Hauptenergiequelle verwendet wird, als eine Fahrbetriebsart, die abhängig von einem Reiseabschnitt zu verwenden ist, zu erzeugen, und wobei die Schaltzeit eine Umschaltzeit der eingestellten Fahrbetriebsart ist.

2. Kommunikationssteuervorrichtung nach Anspruch 1, wobei die Reiseplanerzeugungseinheit (200a, 330, 312) konfiguriert ist zum

Einstellen eines oder mehrerer Übergangspunkte auf einer vorhergesagten Route von einem Abfahrtspunkt zu einem Zielpunkt,

Unterteilen der vorhergesagten Route in mehrere Reiserouten, die durch Übergangspunkte unterteilt sind,

weiter Unterteilen jeder Reiseroute in mehrere Reiseabschnitte und

Einstellen der Fahrbetriebsart aller Reiseabschnitte in wenigstens einer Reiseroute auf die EV-Betriebsart.

3. Kommunikationssteuervorrichtung nach Anspruch 2,

wobei die Reiseplanerzeugungseinheit (200a, 330, 312) eine Routenenergieverbrauchsberechnungseinheit (200a, 330, 312) enthält, die konfiguriert ist, einen Routenenergieverbrauch für jeden Reiseabschnitt, der eine geschätzte Energie ist, die verbraucht wird, wenn jeder der Reiseabschnitte in der EV-Betriebsart gefahren wird, zu berechnen, und

die Reiseplanerzeugungseinheit (200a, 330, 312) konfiguriert ist zum

Einstellen der Fahrbetriebsart der Reiseabschnitte in der Reiseroute auf die EV-Betriebsart in aufsteigender Reihenfolge des Routenenergieverbrauchs für jeden Reiseabschnitt, bis der akkumulierte Wert, der durch Addieren des Routenenergieverbrauchs der Reiseabschnitte erhalten wird, eine verfügbare Energie der fahrzeugintern Batterie (50) übersteigt, und

Einstellen der Fahrbetriebsart der anderen Reiseabschnitte der Reiseroute auf die HV-Betriebsart.

4. Kommunikationssteuervorrichtung nach einem der Ansprüche 1 bis 3, wobei eine weitere Schaltzeit die Umschaltzeit der Kraftmaschinensteuerung gemäß einer vorausgesagten Fahrbelastung ist.

5. Kommunikationssteuervorrichtung nach einem der Ansprüche 1 bis 4, wobei eine weitere Schaltzeit die Änderungszeit eines vorhergesagten Straßenzustands ist.

6. Kommunikationssteuervorrichtung nach einem der Ansprüche 1 bis 5, wobei die Kommunikationssteuervorrichtung konfiguriert ist, den Reiseplan gemäß der Fahrt des Fahrzeugs (100) neu zu berechnen und zu aktualisieren.

7. Kommunikationssteuervorrichtung nach einem der Ansprüche 1 bis 6, wobei die Kommunikationssteuervorrichtung an die Mobilkommunikationsvorrichtung (306) montiert ist.

8. Kommunikationssteuervorrichtung nach einem der Ansprüche 1 bis 6, wobei die Kommunikationssteuervorrichtung mit der Mobilkommunikationsvorrichtung (306) kommunizieren kann und konfiguriert ist, den erzeugten Reiseplan zu der Mobilkommunikationsvorrichtung (306) zu senden.

9. Kommunikationssteuervorrichtung nach einem der Ansprüche 1 bis 8, wobei der Kommunikationsplan ein Plan von wenigstens einem aus einer Kommunikationsmenge und der Kommunikationshäufigkeit zum Kommunizieren von Daten, die sich auf Fahrzeuginformationen des Fahrzeugs (100) beziehen, von der fahrzeuginternen Kommunikationssteuervorrichtung (305) zu der Mobilkommunikationsvorrichtung (306) ist.

10. Kommunikationssystem, das Folgendes umfasst:

eine fahrzeuginterne Kommunikationsvorrichtung (304), die in einem Fahrzeug (100) vorgesehen ist;
eine Mobilkommunikationsvorrichtung (306), die zur Datenkommunikation mit der fahrzeuginternen Kommunikationsvorrichtung (304) fähig ist;
einen Server, der konfiguriert ist, die Mobilkommunikationsvorrichtung (306) über ein Kommunikationsnetz zu steuern;
eine Kommunikationsplanerzeugungseinheit (200a, 330, 312), die konfiguriert ist zum:

Erzeugen oder Erfassen eines Reiseplans des Fahrzeugs (100), das mit der fahrzeuginternen Kommunikationsvorrichtung (304) ausgestattet ist; und
Erzeugen eines Kommunikationsplans zum Umschalten wenigstens eines aus einer Kommunikationsmenge und einer Kommunikationshäufigkeit zwischen der fahrzeuginternen Kommunikationsvorrichtung (304) und der Mobilkommunikationsvorrichtung (306) zur Schaltzeit eines Fahrzustands des Reiseplans gemäß einer Betriebsartänderung des Fahrzustands, wobei

das Fahrzeug (100) ein Fahrzeug zum Hybridtyp ist, das eine Kraftmaschine (10), eine aufladbare und entladbare fahrzeuginterne Batterie (50) und eine rotierende elektrische Maschine (30; 40), die durch die Energie der fahrzeuginternen Batterie (50) angetrieben wird, enthält, wobei
die Kommunikationsplanerzeugungseinheit (200a, 330, 312) konfiguriert ist, den Reiseplan durch Einstellen entweder einer EV-Betriebsart, in der die Energie der fahrzeuginternen Batterie (50) als eine Hauptenergiequelle verwendet wird, oder einer HV-Betriebsart, in der die Kraftmaschine als die Hauptenergiequelle verwendet wird, als eine Fahrbetriebsart, die abhängig von einem Reiseabschnitt zu verwenden ist, und wobei
die Schaltzeit eine Umschaltzeit der eingestellten Fahrbetriebsart ist.

11. Verfahren zum Steuern der Kommunikation einer fahrzeuginternen Kommunikationsvorrichtung (304), die mit einer Mobilkommunikationsvorrichtung (306) kommunizieren kann, wobei das Verfahren Folgendes umfasst:

Erzeugen oder Erfassen eines Reiseplans eines Fahrzeugs (100), das mit der fahrzeuginternen Kommunikationsvorrichtung (304) ausgestattet ist, und Speichern des Reiseplans in einer Speichereinheit; und
Erzeugen eines Kommunikationsplans zum Umschalten wenigstens eines aus einer Kommunikationsmenge und einer Kommunikationshäufigkeit zwischen der fahrzeuginternen Kommunikationsvorrichtung (304) und der Mobilkommunikationsvorrichtung (306) zur Schaltzeit eines Fahrzustands des Reiseplans gemäß einer Betriebsartänderung des Fahrzustands, wobei
das Fahrzeug (100) ein Fahrzeug vom Hybridtyp ist, das eine Kraftmaschine (10), eine aufladbare und entladbare fahrzeuginterne Batterie (50) und eine rotierende elektrische Maschine (30; 40), die durch die Energie der fahrzeuginternen Batterie (50) angetrieben wird, enthält, wobei
das Erzeugen des Reiseplans ferner das Erzeugen des Reiseplans durch Einstellen entweder einer EV-Betriebsart, in der die Energie der fahrzeuginternen Batterie (50) als eine Hauptenergiequelle verwendet wird, oder einer HV-Betriebsart, in der die Kraftmaschine als die Hauptenergiequelle verwendet wird, als eine Fahrbetriebsart, die abhängig von einem Reiseabschnitt zu verwenden ist, umfasst, und wobei
die Schaltzeit eine Umschaltzeit der eingestellten Fahrbetriebsart ist.

## Revendications

1. Dispositif de commande de communication permettant de commander la communication d'un dispositif de communication embarqué (304) propre à communiquer avec un dispositif de communication mobile (306), le dispositif de commande de communication comprenant :

une unité de création de plan de trajet (200a, 330, 312) configurée pour créer ou acquérir un plan de trajet d'un véhicule équipé du dispositif de communication embarqué (304) et créer un plan de communication pour commuter une quantité de communication et/ou une fréquence de communication entre le dispositif de communication embarqué (304) et le dispositif de communication mobile (306) à un temps de commutation d'un état de trajet du plan de trajet selon un changement de mode de l'état de trajet,
le véhicule (100) étant un véhicule de type hybride comportant un moteur (10), une batterie embarquée chargeable et déchargeable (50) et une machine électrique rotative (30 ; 40) entraînée par l'énergie de la batterie embarquée (50),
l'unité de création de plan de trajet (200a, 330, 312) étant configurée pour créer le plan de trajet en établissant soit un mode EV dans lequel l'énergie de la batterie embarquée (50) est utilisée comme une source d'énergie principale, soit un mode HV dans lequel le moteur est utilisé comme la source d'énergie principale comme un mode de trajet à utiliser en fonction d'un tronçon de trajet, et

le temps de commutation étant un temps de commutation du mode de trajet établi.

2. Dispositif de commande de communication selon la revendication 1, dans lequel l'unité de création de plan de trajet (200a, 330, 312) est configurée pour

établir un ou plusieurs points de transit sur un parcours prévu depuis un point de départ jusqu'à un point de destination, diviser le parcours prévu en une pluralité de parcours de trajet divisés par les points de transit, diviser encore chacun des parcours de trajet en une pluralité de tronçons de trajet, et établir le mode de trajet de tous les tronçons de trajet dans au moins un parcours de trajet au mode EV.

3. Dispositif de commande de communication selon la revendication 2, dans lequel l'unité de création de plan de trajet (200a, 330, 312) comporte une unité de calcul de consommation d'énergie de parcours (200a, 330, 312) configurée pour calculer une consommation d'énergie de parcours pour chaque tronçon de trajet, à savoir une énergie consommée lorsque chacun des tronçons de trajet est parcouru dans le mode EV, et l'unité de création de plan de trajet (200a, 330, 312) est configurée pour

établir le mode de trajet des tronçons de trajet dans le parcours de trajet au mode EV par ordre croissant de la consommation d'énergie de parcours pour chaque tronçon de trajet, jusqu'à ce que la valeur cumulée obtenue en additionnant la consommation d'énergie de parcours desdits tronçons de trajet dépasse une énergie disponible de la batterie embarquée (50), et
établir le mode de trajet des autres tronçons de trajet du parcours de trajet au mode HV.

4. Dispositif de commande de communication selon l'une quelconque des revendications 1 à 3, dans lequel un autre temps de commutation est un temps de commutation de commande moteur selon une charge de trajet prévue.

5. Dispositif de commande de communication selon l'une quelconque des revendications 1 à 4, dans lequel un autre temps de commutation est un temps de changement d'une condition routière prévue.

6. Dispositif de commande de commutation selon l'une quelconque des revendications 1 à 5, lequel dispositif de commande de communication est configuré pour recréer et mettre à jour le plan de trajet selon le trajet du véhicule (100).

7. Dispositif de commande de commutation selon l'une quelconque des revendications 1 à 6, lequel dispositif de commande de communication est monté sur le dispositif de communication mobile (306).

8. Dispositif de commande de communication selon l'une quelconque des revendications 1 à 6, lequel dispositif de commande de communication est propre à communiquer avec le dispositif de communication mobile (306) et configuré pour transmettre le plan de trajet créé au dispositif de communication mobile (306).

9. Dispositif de commande de communication selon l'une quelconque des revendications 1 à 8, dans lequel le plan de communication est un plan de la quantité de communication et/ou de la fréquence de communication pour la communication de données relatives à des informations de véhicule du véhicule (100) depuis le dispositif de communication embarqué (304) jusqu'au dispositif de communication mobile (306).

10. Système de communication, comprenant :

un dispositif de communication embarqué (304) placé dans un véhicule (100) ;
un dispositif de communication mobile (306) apte à la communication de données avec le dispositif de communication embarqué (304) ;
un serveur configuré pour commander le dispositif de communication mobile (306) par l'entremise d'un réseau de communication ;
une unité de création de plan de trajet (200a, 330, 312) configurée pour :

créer ou acquérir un plan de trajet du véhicule (100) équipé du dispositif de communication embarqué (304) ; et
créer un plan de communication pour commuter une quantité de communication et/ou une fréquence de communication entre le dispositif de communication embarqué (304) et le dispositif de communication mobile (306) à un temps de commutation d'un état de trajet du plan de trajet selon un changement de mode de l'état de trajet,

le véhicule (100) étant un véhicule de type hybride comportant un moteur (10), une batterie embarquée chargeable et déchargeable (50) et une machine électrique rotative (30 ; 40) entraînée par l'énergie de la batterie embarquée (50),

l'unité de création de plan de trajet (200a, 330, 312) étant configurée pour créer le plan de trajet en établissant soit un mode EV dans lequel l'énergie de la batterie embarquée (50) est utilisée comme une source d'énergie principale, soit un mode HV dans lequel le moteur est utilisé comme la source d'énergie principale comme un mode de trajet à utiliser en fonction d'un tronçon de trajet, et

le temps de commutation étant un temps de commutation du mode de trajet établi.

11. Procédé de commande de la communication d'un dispositif de communication embarqué (304) propre à communiquer avec un dispositif de communication mobile (306), le procédé comprenant :

la création ou l'acquisition d'un plan de trajet d'un véhicule (100) équipé du dispositif de communication embarqué (304), et le stockage du plan de trajet dans une unité de stockage ; et

la création d'un plan de communication pour commuter une quantité de communication et/ou une fréquence de communication entre le dispositif de communication embarqué (304) et le dispositif de communication mobile (306) à un temps de commutation d'un état de trajet du plan de trajet selon un changement de mode de l'état de trajet,

le véhicule (100) étant un véhicule de type hybride comportant un moteur (10), une batterie embarquée chargeable et déchargeable (50) et une machine électrique rotative (30 ; 40) entraînée par l'énergie de la batterie embarquée (50),

la création du plan de trajet comprenant en outre la création du plan de trajet par établissement soit d'un mode EV dans lequel l'énergie de la batterie embarquée (50) est utilisée comme une source d'énergie principale, soit d'un mode HV dans lequel le moteur est utilisé comme la source d'énergie principale comme un mode de trajet à utiliser en fonction d'un tronçon de trajet, et

le temps de commutation étant un temps de commutation du mode de trajet établi.

# FIG.1

300

**SERVER** ⌐310

CPU ⌐330

STORAGE UNIT ⌐332

TRAVEL PLAN CREATION PROGRAM ⌐334

COMMUNICATION PLAN CREATION PROGRAM ⌐335

MAP DATABASE ⌐336

308

**PORTABLE TERMINAL** ⌐306

CPU ⌐312

INTER-DEVICE COMMUNICATION UNIT ⌐314

NETWORK COMMUNICATION UNIT ⌐316

GPS RECEPTION UNIT ⌐318

VICS FUNCTION UNIT ⌐319

DISPLAY ⌐320

STORAGE UNIT ⌐322

DRIVING APPLICATION ⌐324

NAVIGATION UNIT ⌐324a

DATA MON-ITORINMG UNIT ⌐324b

SECONDARY BATTERY ⌐326

**VEHICLE** ⌐100

IN-VEHICLE COMMUNICATION DEVICE ⌐304

ELECTRONIC CONTROL UNIT ⌐200

CPU ⌐200a

STORAGE UNIT ⌐200b

EP 3 648 440 B1

# FIG.2

# FIG.3

300

**SERVER** 310
- CPU 330
- STORAGE UNIT 332
  - MAP DATABASE 336

308

**PORTABLE TERMINAL** 306
- CPU 312
- INTER-DEVICE COMMUNICATION UNIT 314
- NETWORK COMMUNICATION UNIT 316
- GPS RECEPTION UNIT 318
- VICS FUNCTION UNIT 319
- DISPLAY 320
- STORAGE UNIT 322
  - DRIVING APPLICATION 324
    - NAVIGATION UNIT 324a
    - DATA MONITORING UNIT 324b
  - TRAVEL PLAN CREATION PROGRAM 334a
  - COMMUNICATION PLAN CREATION PROGRAM 335a
- SECONDARY BATTERY 326

**VEHICLE** 100
- IN-VEHICLE COMMUNICATION DEVICE 304
- ELECTRONIC CONTROL UNIT 200
  - CPU 200a
  - STORAGE UNIT 200b

EP 3 648 440 B1

# FIG.4

300

SERVER 310

CPU 330

STORAGE UNIT 332

MAP DATABASE 336

308

PORTABLE TERMINAL 306

INTER-DEVICE COMMUNICATION UNIT 314

NETWORK COMMUNICATION UNIT 316

GPS RECEPTION UNIT 318

VICS FUNCTION UNIT 319

DISPLAY 320

CPU 312

STORAGE UNIT 322

DRIVING APPLICATION 324

NAVIGATION UNIT 324a

DATA MONITORING UNIT 324b

SECONDARY BATTERY 326

VEHICLE 100

IN-VEHICLE COMMUNICATION DEVICE 304

ELECTRONIC CONTROL UNIT 200

CPU 200a

STORAGE UNIT 200b

TRAVEL PLAN CREATION PROGRAM 334b

COMMUNICATION PLAN CREATION PROGRAM 335b

EP 3 648 440 B1

# FIG.5

```
                    ┌──────────────┐
                    │    START     │
                    └──────┬───────┘
                           │  ⌐S1
              ┌────────────┴────────────────┐
              │ REQUEST CREATION OF TRAVEL PLAN │
              └────────────┬────────────────┘
                           │  ⌐S2
              ┌────────────┴────────────────┐
              │    TRANSMIT INFORMATION OF    │
              │ DEPARTURE POINT AND DESTINATION│
              │       POINT TO SERVER          │
              └────────────┬────────────────┘
                           │  ⌐S3
              ┌────────────┴────────────────┐
              │  SERVER CREATES TRAVEL PLAN   │
              └────────────┬────────────────┘
                           │  ⌐S4
              ┌────────────┴────────────────┐
              │ SERVER CREATES COMMUNICATION PLAN │
              └────────────┬────────────────┘
                           │  ⌐S5
              ┌────────────┴────────────────┐
              │  TRANSMIT INFORMATION OF CREATED │
              │  TRAVEL PLAN TO PORTABLE TERMINAL │
              └────────────┬────────────────┘
                           │  ⌐S6
              ┌────────────┴────────────────┐
              │    PORTABLE TERMINAL STARTS   │
              │         NAVIGATION            │
              └────────────┬────────────────┘
                           │  ⌐S7
              ┌────────────┴────────────────┐
              │    PORTABLE TERMINAL STARTS   │
              │ ACQUISITION OF VEHICLE INFORMATION │
              └────────────┬────────────────┘
```

S1 REQUEST CREATION OF TRAVEL PLAN

S2 TRANSMIT INFORMATION OF DEPARTURE POINT AND DESTINATION POINT TO SERVER

S3 SERVER CREATES TRAVEL PLAN

S4 SERVER CREATES COMMUNICATION PLAN

S5 TRANSMIT INFORMATION OF CREATED TRAVEL PLAN TO PORTABLE TERMINAL

S6 PORTABLE TERMINAL STARTS NAVIGATION

S7 PORTABLE TERMINAL STARTS ACQUISITION OF VEHICLE INFORMATION

S8 ARRIVED AT DESTINATION POINT? — YES → END

NO

S9 REACHED SWITCHING POINT OF TRAVEL SECTION? — NO

YES

S10 SWITCHING TIMING OF TRAVEL MODE REACHED? — NO

YES

S11 HV MODE OR EV MODE? — EV

HV

S12 SET COMMUNICATION CONDITIONS FOR HV MODE

S13 SET COMMUNICATION CONDITIONS FOR EV MODE

28

# FIG.6

- - - ► LARGE CHANGE

──► NO/SMALL CHANGE

TRAVEL PLAN (ADVANCE GRASPING)

| DEPARTURE/ START | MODE SWITCHING | | MODE SWITCHING | ARRIVAL/END |
|---|---|---|---|---|

VEHICLE CONTROL

| HV MODE | EV MODE | EV MODE | HV MODE |
|---|---|---|---|

| SHORT CYCLE ACQUISITION | SHORT CYCLE ACQUISITION | SHORT CYCLE ACQUISITION | SHORT CYCLE ACQUISITION |
|---|---|---|---|

HV-RELATED DATA

| SHORT CYCLE ACQUISITION | STOP OR LONG CYCLE ACQUISITION | STOP OR LONG CYCLE ACQUISITION | SHORT CYCLE ACQUISITION |
|---|---|---|---|

ENGINE-RELATED DATA

| COMMUNICATION AMOUNT: APPROPRIATE | COMMUNICATION AMOUNT: SMALL (BATTERY CONSUMPTION: SMALL) (DATA: OBTAINED) | COMMUNICATION AMOUNT: SMALL (BATTERY CONSUMPTION: SMALL) (DATA: OBTAINED) | COMMUNICATION AMOUNT: APPROPRIATE |
|---|---|---|---|

TRAVEL SECTION

| k1 | k2 | k3 | k4 |
|---|---|---|---|

C C C

29

EP 3 648 440 B1

FIG.7

START

S101
REQUEST CREATION OF TRAVEL PLAN

S102
TRANSMIT INFORMATION OF DEPARTURE POINT AND DESTINATION POINT TO SERVER

S103
SERVER CREATES TRAVEL PLAN

S104
SERVER CREATES COMMUNICATION PLAN

S105
TRANSMIT INFORMATION OF CREATED TRAVEL PLAN TO PORTABLE TERMINAL

S106
PORTABLE TERMINAL STARTS NAVIGATION

S107
PORTABLE TERMINAL STARTS ACQUISITION OF VEHICLE INFORMATION

S108
ARRIVED AT DESTINATION POINT? — YES → END

NO

S109
HV MODE OR EV MODE? — EV

HV

S110
LOW TRAVEL LOAD? — YES

NO

S111
AT OR HIGHER THAN THRESHOLD TEMPERATURE? — NO

YES

S112
SET COMMUNICATION CONDITIONS AT ENGINE CONTROL

S113
SET COMMUNICATION CONDITIONS AT NON-ENGINE CONTROL

30

# FIG.8

FIG.9

START

REQUEST CREATION OF TRAVEL PLAN — S201

TRANSMIT INFORMATION OF DEPARTURE POINT AND DESTINATION POINT TO SERVER — S202

SERVER CREATES TRAVEL PLAN — S203

SERVER CREATES COMMUNICATION PLAN — S204

TRANSMIT INFORMATION OF CREATED TRAVEL PLAN TO PORTABLE TERMINAL — S205

PORTABLE TERMINAL STARTS NAVIGATION — S206

PORTABLE TERMINAL STARTS ACQUISITION OF VEHICLE INFORMATION — S207

ARRIVED AT DESTINATION POINT? — S208
YES → END
NO

HV MODE OR EV MODE? — S209
EV
HV

LOW TRAVEL LOAD? — S210
NO
YES

DOWNWARD GRADIENT? — S211
NO
YES

SET COMMUNICATION CONDITIONS AT LOW LOAD — S212

SET COMMUNICATION CONDITIONS AT MIDDLE TO HIGH LOAD — S213

32

# FIG.10

# FIG.11

START

S301
REQUEST CREATION OF TRAVEL PLAN

S302
TRANSMIT INFORMATION OF DEPARTURE POINT AND DESTINATION POINT TO SERVER

S303
SERVER CREATES TRAVEL PLAN

S304
SERVER CREATES COMMUNICATION PLAN

S305
TRANSMIT INFORMATION OF CREATED TRAVEL PLAN TO PORTABLE TERMINAL

S306
PORTABLE TERMINAL STARTS NAVIGATION

S307
PORTABLE TERMINAL STARTS ACQUISITION OF VEHICLE INFORMATION

S308
ARRIVED AT DESTINATION POINT? — YES → END

NO

S309
FREEWAY? — NO →

YES

S310
TRAFFIC JAM SECTION? — YES →

NO

S311
FORWARD VEHICLE DETECTED? — YES →

NO

S312
STOP ACQUISITION OF COLLISION AVOIDANCE CONTROL DATA AND DOOR OPEN/CLOSE DATA

S313
ACQUIRE COLLISION AVOIDANCE CONTROL DATA AND DOOR OPEN/CLOSE DATA

34

# FIG.12

# FIG.13

```
        ┌──────────────┐
        │    START     │
        └──────┬───────┘
               │
               ▼         ⌇S401
        ╱────────────╲          EV
       ╱  HV MODE OR   ╲───────────────────────────────────────┐
       ╲   EV MODE?    ╱                                        │
        ╲────────────╱                                         │
               │ HV                                            │
               ▼         ⌇S402                                 │
        ╱────────────╲                                         │
       ╱     IS        ╲        NO                             │
      ╱ ESTIMATED WATER ╲──────────────┐                       │
      ╲TEMPERATURE EQUAL╱              │                       │
       ╲TO OR HIGHER THAN╱             │                       │
        ╲  THRESHOLD? ╱                │                       │
               │ YES                   │                       │
               ▼         ⌇S403         │                       │
        ╱────────────╲                 │                       │
       ╱ IS ESTIMATED  ╲       NO       │                       │
      ╱ ENGINE STATE    ╲──────────┐   │                       │
      ╲ IDLING,         ╱          │   │                       │
       ╲HIGH LOAD,     ╱           ▼   ▼                       ▼
        ╲OR OTHER?  ╱                                          
               │ YES  ⌇S404          ⌇S405                   ⌇S406
               ▼                       ▼                       ▼
   ┌────────────────────┐  ┌────────────────────┐  ┌────────────────────┐
   │START COMMUNICATION OF│ │  PARTIALLY START   │  │STOP COMMUNICATION OF│
   │   EGR CONTROL DATA   │ │COMMUNICATION OF EGR│  │  EGR CONTROL DATA   │
   │                      │ │   CONTROL DATA     │  │                     │
   └──────────┬───────────┘ └─────────┬──────────┘  └──────────┬──────────┘
              │                        │                        │
              ◄────────────────────────────────────────────────┘
              │
              ▼
        ┌──────────────┐
        │     END      │
        └──────────────┘
```

# FIG.14

```
                    ┌─────────────┐
                    │    START    │
                    └──────┬──────┘
                           │
                           ▼          ⌐S501
                     ╱───────────╲              EV
                  ╱─────────────────╲──────────────────┐
                 ╲  HV MODE OR EV MODE? ╱               │
                  ╲─────────────────╱                   │
                     ╲───────────╱                      │
                           │ HV                         │
                           ▼          ⌐S502             │
       YES           ╱───────────╲                      │
    ┌───────────────╱─────────────────╲                │
    │              ╲ IS ESTIMATED EGR   ╱               │
    │               ╲ CONTROL OFF⇒ON?  ╱                │
    │                ╲───────────────╱                  │
    │                  ╲───────────╱                    │
    │                        │ NO                       │
    │                        ▼        ⌐S503             │
    │                  ╱───────────╲                    │
    │               ╱─────────────────╲     NO          │
    │              ╱  IS ESTIMATED       ╲───────────────┤
    │             ╲ ENGINE STATE DURING  ╱              │
    │              ╲ ROTATION TRANSITION ╱               │
    │               ╲    TIMING?        ╱                │
    │                ╲───────────────╱                  │
    │                  ╲───────────╱                    │
    │                        │ YES     ⌐S504            │      ⌐S505
    │        ┌───────────────▼─────────────┐   ┌──────────────────────────┐
    └───────►│ START COMMUNICATION OF       │   │ STOP COMMUNICATION OF    │
             │ MISFIRE DETERMINATION        │   │ MISFIRE DETERMINATION    │
             │ CONTROL DATA                 │   │ CONTROL DATA             │
             └───────────────┬─────────────┘   └────────────┬─────────────┘
                             │◄───────────────────────────────┘
                             ▼
                    ┌─────────────┐
                    │     END     │
                    └─────────────┘
```

37

# FIG.15A

START

⌐S601

SET TRANSIT POINT, ROUTE, AND TRAVEL SECTION

⌐S602

CALCULATE EV APPROPRIATENESS DEGREE AND SECTION POWER CONSUMPTION

⌐S603

CALCULATE TE

⌐S604

CE ≥ TE?

NO

YES ⌐S605

SET ALL TRAVEL SECTIONS TO EV SECTIONS

⌐S606

PERFORM FIRST SORTING PROCESSING

⌐S607

IS THERE SORTED SECTION NUMBER k SATISFYING INEQUALITY EXPRESSION (1)?

YES

NO ⌐S608

SET ALL TRAVEL SECTIONS TO HV SECTIONS

⌐S609

CALCULATE SORTED SECTION NUMBER k SATISFYING INEQUALITY EXPRESSION (1)

⌐S610

CREATE FIRST TRAVEL PLAN

⌐S611

CALCULATE DF1 AND HF1

⌐S612

CALCULATE TF1

①

END

# FIG.15B

① 1

S613
CALCULATE ROUTE POWER CONSUMPTION

S614
PERFORM SECOND SORTING PROCESSING

S615
IS THERE SORTED ROUTE NUMBER k SATISFYING INEQUALITY EXPRESSION (2)? — YES

NO

S616
CALCULATE SORTED ROUTE NUMBER k SATISFYING INEQUALITY EXPRESSION (2)

S617
CREATE SECOND TRAVEL PLAN

S618
CALCULATE DF2 AND HF2

S619
CALCULATE TF2

S620
TF1≥TF2? — YES

NO

S621
ADOPT FIRST TRAVEL PLAN

S622
ADOPT SECOND TRAVEL PLAN

END

# FIG.16A

| | DEPARTURE POINT / TRAVEL SECTION | | TRAVEL ROUTE | | TRANSIT POINT | | | | DESTINATION POINT |
|---|---|---|---|---|---|---|---|---|---|
| ACTUAL ROUTE NUMBER | 1 | | | | | 2 | | | |
| ACTUAL SECTION NUMBER | 1 | 2 | 3 | 4 | 5 | 6 | 7 | 8 | 9 | 10 |
| TRAVEL LOAD | HIGH | MIDDLE | LOW | MIDDLE | HIGH | LOW | MIDDLE | HIGH | MIDDLE | LOW |
| EV APPROPRIATENESS DEGREE | 1 | 2 | 3 | 2 | 1 | 3 | 2 | 1 | 2 | 3 |
| SECTION POWER CONSUMPTION | 3 | 2 | 1 | 2 | 3 | 1 | 2 | 3 | 2 | 1 |

EP 3 648 440 B1

# FIG.16B

FIRST SORTING PROCESSING

| | DEPARTURE POINT | | | | | | | | | DESTINATION POINT |
|---|---|---|---|---|---|---|---|---|---|---|
| ACTUAL ROUTE NUMBER | 1 | 2 | 2 | 1 | 1 | 2 | 2 | 1 | 1 | 2 |
| ACTUAL SECTION NUMBER | —3→ | —6→ | —10→ | —2→ | —4→ | —7→ | —9→ | —1→ | —5→ | —8→ |
| TRAVEL LOAD | LOW | | | MIDDLE | | | HIGH | | | |
| EV APPROPRIATENESS DEGREE | 3 | 3 | 3 | 2 | 2 | 2 | 2 | 1 | 1 | 1 |
| SECTION POWER CONSUMPTION | 1 | 1 | 1 | 2 | 2 | 2 | 2 | 3 | 3 | 3 |
| SORTED SECTION NUMBER | 1 | 2 | 3 | 4 | 5 | 6 | 7 | 8 | 9 | 10 |
| TRAVEL MODE | EV | EV | EV | EV | EV | EV | HV | HV | HV | HV |

EP 3 648 440 B1

# FIG.16C

FIRST TRAVEL PLAN

| | DEPARTURE POINT | | | | | TRANSIT POINT | | | | DESTINATION POINT |
|---|---|---|---|---|---|---|---|---|---|---|
| ACTUAL ROUTE NUMBER | | | 1 | | | → | | 2 | | → |
| ACTUAL SECTION NUMBER | 1→ | 2→ | 3→ | 4→ | 5→ | 6→ | 7→ | 8→ | 9→ | 10→ |
| TRAVEL LOAD | HIGH | MIDDLE / LOW | | MIDDLE | HIGH | LOW | MIDDLE | HIGH | MIDDLE | LOW |
| SORTED SECTION NUMBER | 8 | 4 | 1 | 5 | 9 | 2 | 6 | 10 | 7 | 3 |
| TRAVEL MODE | HV | EV | EV | EV | HV | EV | EV | HV | HV | EV |
| SECTION FUEL CONSUMPTION | 2.5 | 0 | 0 | 0 | 2.5 | 0 | 0 | 2.5 | 2 | 0 |
| ROUTE WARM-UP FUEL CONSUMPTION | 2 | 0 | 0 | 0 | 0 | 0 | 0 | 2 | 0 | 0 |
| TRAVEL FUEL CONSUMPTION (DF1) | 9.5 | | | | | | | | | |
| WARM-UP FUEL CONSUMPTION (HF1) | 4 | | | | | | | | | |
| FIRST TOTAL FUEL CONSUMPTION (TF1) | 13.5 | | | | | | | | | |

EP 3 648 440 B1

# FIG.17A

EP 3 648 440 B1

| | DEPARTURE POINT | | | TRAVEL ROUTE | | TRANSIT POINT | | | | DESTINATION POINT |
|---|---|---|---|---|---|---|---|---|---|---|
| ACTUAL ROUTE NUMBER | | | 1 | | | | | 2 | | |
| ACTUAL SECTION NUMBER | 1 | 2 | 3 | 4 | 5 | 6 | 7 | 8 | 9 | 10 |
| TRAVEL LOAD | HIGH | MIDDLE | LOW | MIDDLE | HIGH | LOW | MIDDLE | HIGH | MIDDLE | LOW |
| EV APPROPRIATENESS DEGREE | 1 | 2 | 3 | 2 | 1 | 3 | 2 | 1 | 2 | 3 |
| SECTION POWER CONSUMPTION | 3 | 2 | 1 | 2 | 3 | 1 | 2 | 3 | 2 | 1 |
| ROUTE POWER CONSUMPTION | 11 | | | | | 9 | | | | |

# FIG.17B

SECOND SORTING PROCESSING

| | DEPARTURE POINT | | | | TRANSIT POINT | | | | DESTINATION POINT |
|---|---|---|---|---|---|---|---|---|---|
| ACTUAL ROUTE NUMBER | 2 | | | | | 1 | | | |
| ACTUAL SECTION NUMBER | 6 | 7 | 8 | 9 | 10 | 1 | 2 | 3 | 4 | 5 |
| TRAVEL LOAD | LOW | MIDDLE | HIGH | MIDDLE | LOW | HIGH | MIDDLE | LOW | MIDDLE | HIGH |
| ROUTE POWER CONSUMPTION | 9 | | | | | 11 | | | | |
| SORTED SECTION NUMBER | 1 | | | | | 2 | | | | |
| TRAVEL MODE | EV | EV | EV | EV | EV | HV | HV | HV | HV | HV |

# FIG.17C

SECOND TRAVEL PLAN

<table>
<thead>
<tr><th></th><th colspan="5">DEPARTURE POINT</th><th colspan="5">TRANSIT POINT → DESTINATION POINT</th></tr>
</thead>
<tbody>
<tr><td>ACTUAL ROUTE NUMBER</td><td colspan="5">1</td><td colspan="5">2</td></tr>
<tr><td>ACTUAL SECTION NUMBER</td><td>1</td><td>2</td><td>3</td><td>4</td><td>5</td><td>6</td><td>7</td><td>8</td><td>9</td><td>10</td></tr>
<tr><td>TRAVEL LOAD</td><td>HIGH</td><td>MIDDLE</td><td>LOW</td><td>MIDDLE</td><td>HIGH</td><td>LOW</td><td>MIDDLE</td><td>HIGH</td><td>MIDDLE</td><td>LOW</td></tr>
<tr><td>ROUTE POWER CONSUMPTION</td><td colspan="5">11</td><td colspan="5">9</td></tr>
<tr><td>SORTED SECTION NUMBER</td><td colspan="5">2</td><td colspan="5">1</td></tr>
<tr><td>TRAVEL MODE</td><td>HV</td><td>HV</td><td>HV</td><td>HV</td><td>HV</td><td>EV</td><td>EV</td><td>EV</td><td>EV</td><td>EV</td></tr>
<tr><td>SECTION FUEL CONSUMPTION</td><td>2.5</td><td>2</td><td>1.5</td><td>2</td><td>2.5</td><td>0</td><td>0</td><td>0</td><td>0</td><td>0</td></tr>
<tr><td>ROUTE WARM-UP FUEL CONSUMPTION</td><td>2</td><td>0</td><td>0</td><td>0</td><td>0</td><td>0</td><td>0</td><td>0</td><td>0</td><td>0</td></tr>
<tr><td>TRAVEL FUEL CONSUMPTION (DF2)</td><td colspan="10">10.5</td></tr>
<tr><td>WARM-UP FUEL CONSUMPTION (HF2)</td><td colspan="10">2</td></tr>
<tr><td>SECOND TOTAL FUEL CONSUMPTION (TF2)</td><td colspan="10">12.5</td></tr>
</tbody>
</table>

EP 3 648 440 B1

**EP 3 648 440 B1**

**Patent documents cited in the description**

- US 2008287141 A1
- GB 2536718 A
- JP 2017226384 A